(19) Europäisches Patentamt / European Patent Office / Office européen des brevets

(11) **EP 3 363 658 B1**

(12) **EUROPEAN PATENT SPECIFICATION**

(45) Date of publication and mention
of the grant of the patent:
**18.12.2019 Bulletin 2019/51**

(21) Application number: **16855544.9**

(22) Date of filing: **14.10.2016**

(51) Int Cl.:
**B60C 11/16** *(2006.01)*   **B60C 11/00** *(2006.01)*

(86) International application number:
**PCT/JP2016/080591**

(87) International publication number:
**WO 2017/065291 (20.04.2017 Gazette 2017/16)**

(54) **STUDDABLE TIRE, AND METHOD FOR SELECTING RUBBER FOR FORMING TOP RUBBER LAYER AND RUBBER FOR FORMING BASE RUBBER LAYER OF TREAD OF STUDDABLE TIRE**

BESPIKEBARER REIFEN UND VERFAHREN ZUR AUSWAHL VON KAUTSCHUK ZUR HERSTELLUNG DER OBEREN GUMMISCHICHT UND KAUTSCHUK ZUR HERSTELLUNG DER UNTEREN GUMMISCHICHT DER LAUFFLÄCHE EINES BESPIKEBAREN REIFENS

PNEU À CLOUTER ET PROCÉDÉ DE SÉLECTION DE CAOUTCHOUC EN VUE DE LA FORMATION D'UNE COUCHE DE CAOUTCHOUC SUPÉRIEURE ET DE CAOUTCHOUC POUR LA FORMATION D'UNE COUCHE DE CAOUTCHOUC DE BASE DE BANDE DE ROULEMENT DE PNEU À CLOUTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2015 JP 2015204951**

(43) Date of publication of application:
**22.08.2018 Bulletin 2018/34**

(73) Proprietor: **Bridgestone Corporation**
**Tokyo 104-8340 (JP)**

(72) Inventor: **ITO Tomoaki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 261 061      EP-A2- 0 729 826**
**WO-A1-2009/116623      JP-A- H10 278 516**
**JP-A- 2001 163 016      JP-U- S61 145 007**

**EP 3 363 658 B1**

**Description**

BACKGROUND OF THE INVENTION

1. Field of the Invention

The present invention relates to a studdable tire and a method for selecting a rubber for the top rubber layer and a rubber for the base rubber layer of the tread of the studdable tire.

2. Description of the Related Art

Studdable tires are tires having a tread with stud holes for stud insertion on the surface side thereof and studs fitted in the stud holes. The stud holes are so formed as to open on the surface of the tread of the tire. The studs each consist of a body section, a pin section disposed at one end of the body section along the central axis thereof, and a flange section disposed at the other end of the body section along the central axis thereof.
And the studdable tires are so structured that the pin section of the studs with the flange and body sections fitted in the stud holes protrudes from the surface of the tread. It is to be noted that in some cases, it is so arranged that the one-end side of the body section also protrudes from the surface of the tread (see Patent Document 1, for instance) . Reference is also made to EP 2261061 A1 and EP 0729826 A2.

RELATED ART DOCUMENT

Patent Document

Patent Document 1: Japanese Unexamined Patent Application Publication No. 2010-70052

SUMMARY OF THE INVENTION

Problem to be Solved by the Invention

The pin section of the stud is made of a material softer than asphalt and harder than ice (e.g., tungsten carbide) such that the pin section of the stud scrapes asphalt when the vehicle is running on an asphalt road and bites into ice when it is running on an icy road. And the body section of the stud is made of a material softer than that of the pin section (e.g., aluminum).
As a result, the conventional studdable tire shows a tendency of wear such that, when the vehicle travels on icy roads, the rubber on the surface side of the tread wears faster while the wear in the pin section is very slow.
In other words, with the conventional studdable tire, wear tends to occur in the rubber on the surface side of the tread first and the pin section remains intact without much wear. And this causes a problem of the studs falling off the stud holes easily. And accordingly, the studs fail to display such performances as edge performance and anti-stud-loss performance.
However, use of high elastic modulus for the rubber of the surface side of the tread to improve the abrasion resistance of the rubber of the surface side of the tread may decrease the wear in the rubber on the surface side of the tread. But it is known to press the pin section and the body section hard against the road surface, which results in the loss of abrasion resistance of the pin section and the stud as a whole.
Also, softening the material of the pin section to hasten wear in the pin section and the stud in concert with the wear in the rubber part may result in the loss of necessary traction over ice on frozen road surfaces.
Thus, after a thorough investigation, the inventor of the present invention thought of employing a two-layer structure for the tread rubber, which consists of a top rubber layer forming the top layer of the tread rubber and a base rubber layer adjacent to the top rubber layer. And the inventor found that a larger elastic modulus chosen for the rubber of the top rubber layer can improve the abrasion resistance of the tread rubber, whereas a smaller elastic modulus chosen for the rubber of the base rubber layer can moderately lower the abrasion resistance of the pin section without softening the hardness of the pin section. The inventor further found that the progress of wear in the pin section and the stud as a whole and in the tread rubber can be controlled nearly at the same rate by optimizing the ratio of the elastic modulus, namely, toughness TF or elastic modulus E', between the top rubber layer and the base rubber layer of the tread rubber without changing the hardness of the pin section stud materials.
An object of the present invention is therefore to provide a studdable tire capable of retaining the performance such as edge performance of studs and anti-stud-loss performance and a method for selecting rubber for forming the top rubber layer and rubber for forming the base rubber layer of the tread of the studdable tire.

Means for Solving the Problem

The studdable tire according to the present invention has a tread with stud holes for stud insertion on the surface side thereof and studs inserted in the stud holes. The tread consists of a top rubber layer forming the surface layer thereof and a base rubber layer located adjacent to the top rubber layer on the radially inner side thereof. The studs each have a body section, a pin section disposed at one end of the body section along the central axis thereof, and a flange section disposed at the other end of the body section along the central axis thereof. And the pin section of the stud protrudes from the surface of the tread. And for this studdable tire, the rubber for forming the top rubber layer and the rubber for forming a base rubber layer of the tread are so selected as to satisfy the following evaluation formula (1) :

$$0.5 \leqq \text{depth of stud wear} / \text{depth of rubber wear of top rubber layer} = k \times (\text{elastic modulus of rubber of base rubber layer at room temperature} \times \text{elastic modulus of rubber of top rubber layer at room temperature}) \leqq 1.5 \qquad \ldots \ldots (1)$$

where "wear depth of stud" = "height of stud before wear" - "height of stud after wear", "wear depth of rubber of top rubber layer" = "layer thickness of tread before wear" - "layer thickness of tread after wear", and (k is a constant). Therefore, it is possible to control the tendency that the rubber on the surface side of the tread wear first and the pin section remains intact without getting much worn. And the studs may not fall off the stud holes easily, and thus a studdable tire capable of retaining performances, such as the edge performance of the studs and anti-stud-loss performance, can be provided.

In the method for selecting rubbers for forming the top rubber layer and the base rubber layer of the tread of the studdable tire according to the present invention, rubbers for forming the top rubber layer and the base rubber layer of the tread are selected for the studdable tire. The studdable tire has stud holes for stud insertion on the surface side of the tread and studs inserted in the stud holes and the tread having a top rubber layer forming the surface layer of the tread and a base rubber layer positioned adjacent to the top rubber layer on the radially inside thereof. The stud includes a body section, a pin section disposed at one end of the body section along the central axis thereof, and a flange section disposed at the other end of the body section along the central axis thereof. The pin section of the stud fitted in the stud hole protrudes from the surface of the tread. The method comprises selecting rubbers for forming the top rubber layer and the base rubber layer based on the following evaluation formula (1) :

$$0.5 \leqq \text{depth of stud wear} / \text{depth of rubber wear of top rubber layer} = k \times (\text{elastic modulus of rubber of base rubber layer at room temperature} \times \text{elastic modulus of rubber of top rubber layer at room temperature}) \leqq 1.5 \ldots \ldots \qquad (1)$$

where "wear depth of stud" = "height of stud before wear" - "height of stud after wear", "wear depth of rubber of top rubber layer" = "layer thickness of tread before wear" - "layer thickness of tread after wear", and (k is a constant) . Accordingly, it is possible to control the tendency that the rubber on the surface side of the tread wear first and the pin section remains without getting much worn. And thus the studs may not fall out of the stud holes easily, and hence a studdable tire capable of retaining performances, such as the edge performance of the studs and anti-stud-loss performance, for a long time can be provided. And it has been found that the progress of wear in the stud and rubber can be most effectively controlled when the elastic modulus is the toughness at 23°C or the elastic modulus is the dynamic tensile elastic modulus at 23°C.

It is to be understood that the foregoing summary of the invention does not necessarily recite all the features essential to the invention, and subcombinations of all these features are intended to be included in the invention.

BRIEF DESCRIPTION OF THE DRAWINGS

FIG. 1A is a cross-sectional view of a stud of a studdable tire before wear. FIG. 1B is a cross-sectional view of a stud of a studdable tire after wear.
FIG.2 is a table showing test results.
FIG.3 is a table showing test results.
FIG. 4A is a plan view of a stud hole. FIG. 2B is a vertical cross-sectional view of a stud hole.
FIG. 5A is a plan view of a stud. FIG. 5B is a front view of a stud.
FIG. 6 is a cross-sectional view of a studdable tire.
FIG. 7 is illustrations showing how a stud is inserted in a stud hole.

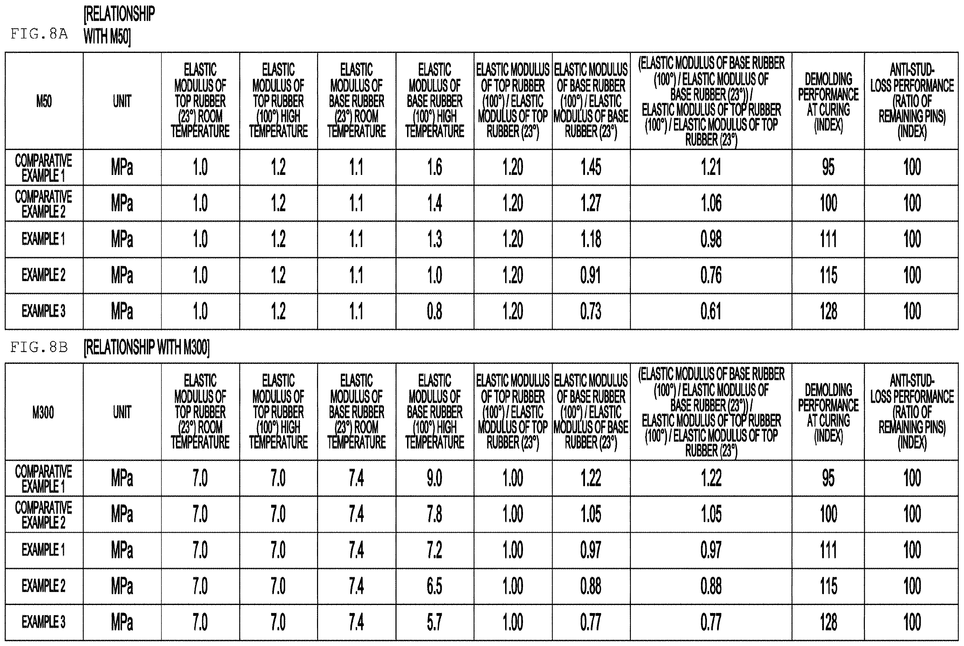

FIG. 8 is tables showing test results.

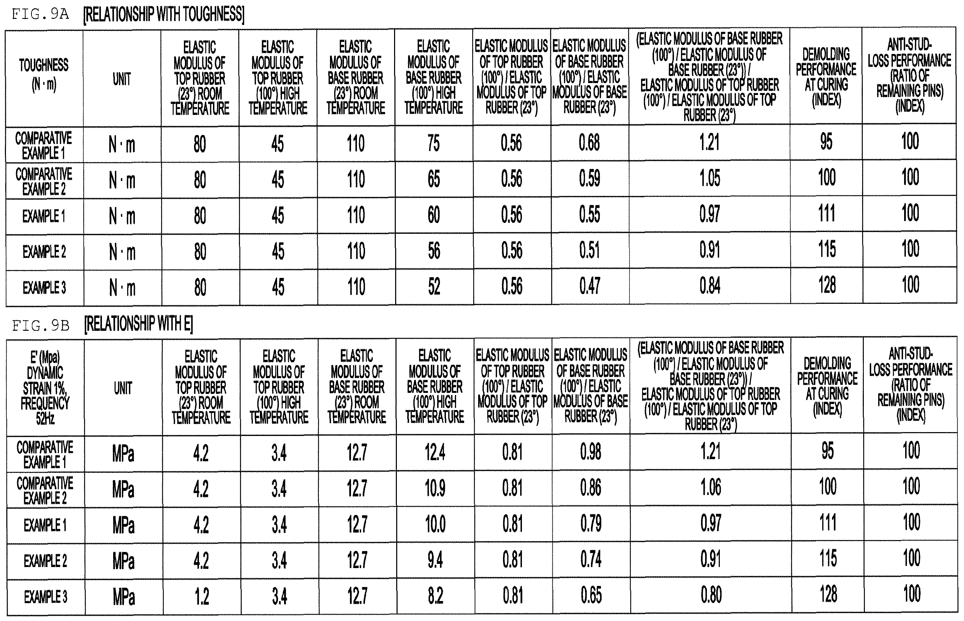

FIG. 9 is tables showing test results.

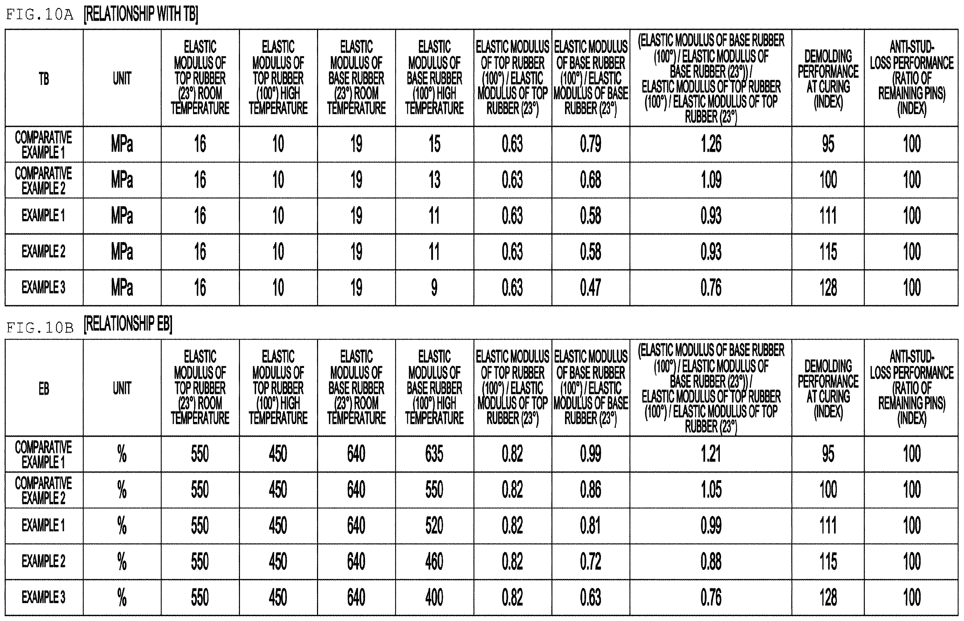

FIG. 10 is tables showing test results.

The embodiments therefore must be construed to include selectively employed features as well.

BEST MODE FOR CARRYING OUT THE INVENTION

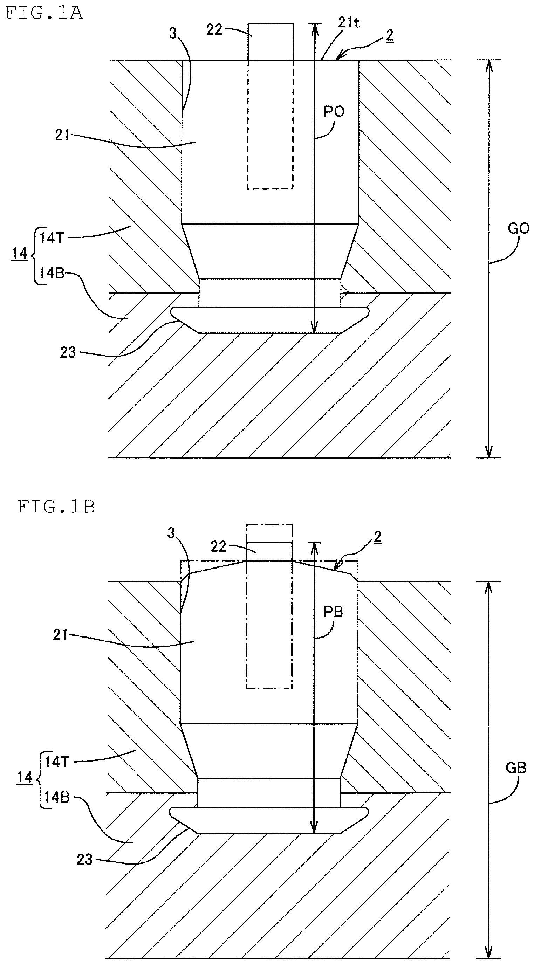

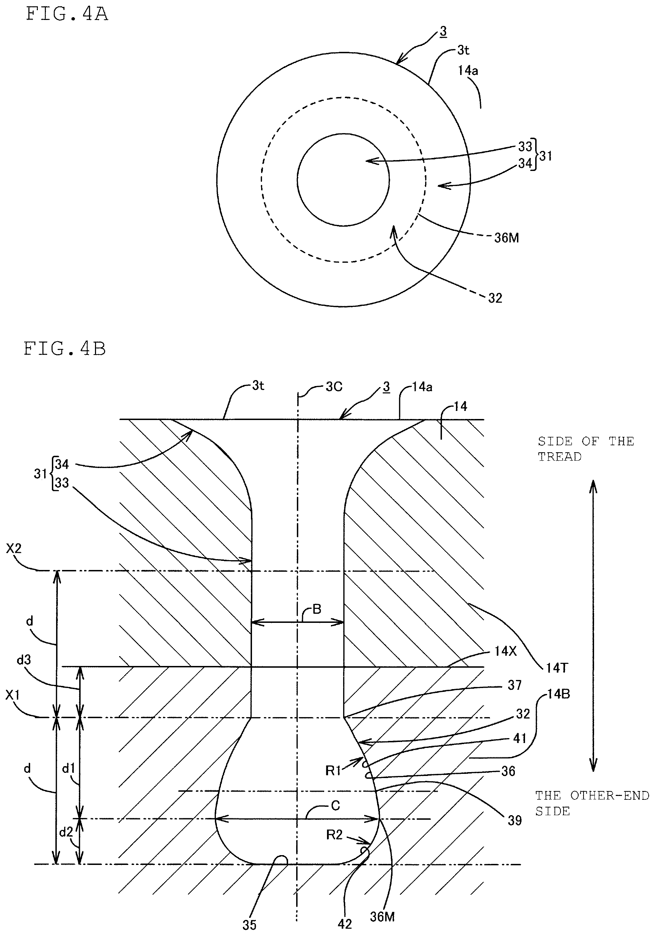

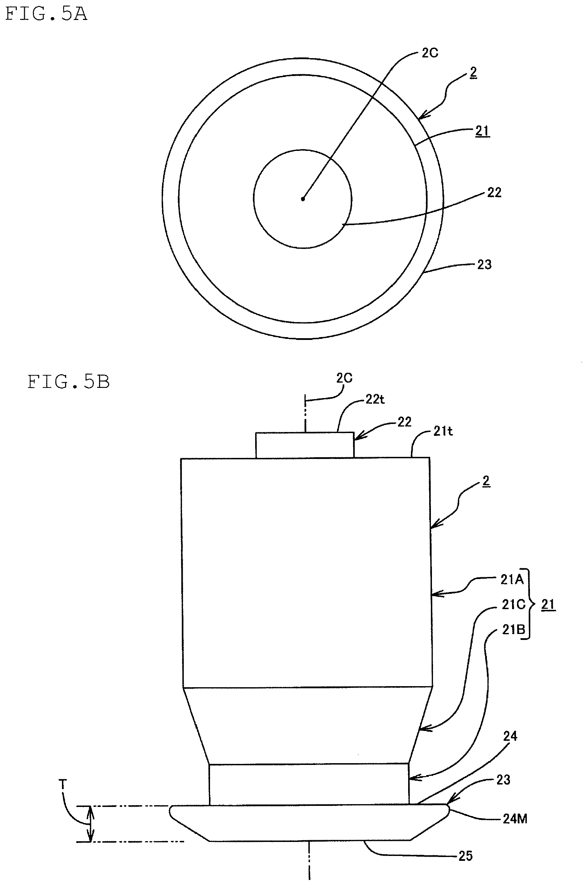

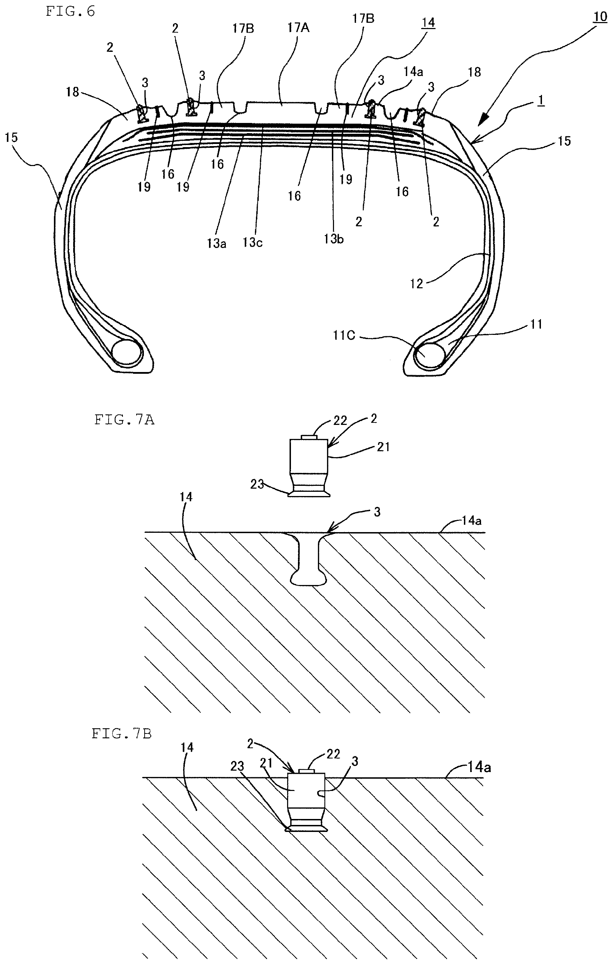

Hereinafter, the invention will be described based on preferred embodiments which do not intend to limit the scope of the claims of the present invention. Not all of the combinations of the features described in the embodiments are necessarily essential to the solutions proposed by the invention.
Referring to FIGS. 1 to 7, a description is given of a structure of a studdable tire (sometimes called "spiked tire") 10.
As shown in FIG. 6, the studdable tire 10 is comprised of a tire 1 having stud holes (stud recesses) 3 for insertion of studs (sometimes called spike pins) 2 on the surface side 14a of the tread 14 and studs 2 inserted in the stud holes 3 of the tire 1. The stud holes 3 are so formed as to open on the surface 14a of the tread 14 of the tire 1.
The tire 1 includes beads 11, bead cores 11C, a carcass layer 12, belt layers 13a, 13b, a tread 14, sidewalls 15, and stud holes 3.
The carcass layer 12 is a framework member disposed astride a pair of bead cores 11C disposed in the beads 11. The inside belt layer 13a and the outside belt layer 13b are disposed on the radially outside of the crown region of the carcass layer 12. The belt layers 13a and 13b are respectively formed with steel cords or stranded cords of organic fiber crossed at an angle of 20 to 70 degrees with respect to the equator of the tire. Therefore, the extension direction of the cords of the belt layer 13a located radially inside of the tire is crossed with the extension direction of the cords of the belt layer 13b located radially outside of the tire.
The tread 14 is a rubber member (tread rubber) disposed radially outside of the belt layers 13a, 13b. The tread 14, as shown in FIG. 1 and FIG. 4, is comprised of a base rubber layer 14B disposed on the radially outer side of the belt layers 13a, 13b and a top rubber layer 14T placed on the base rubber layer 14B to form the top layer of the tread 14. That is, the tread 14 is composed of the top rubber layer 14T forming the top layer thereof and the base rubber layer 14B positioned adjacent to the top rubber layer 14T on the radially inner side of the top rubber layer 14T.
As shown in FIG. 6, formed in the surface 14a of the tread 14 are diagonal main lug grooves 16 provided to extend diagonally with respect to the circumferential direction and the axial direction of the tire. ? These diagonal main lug grooves 16 define a plurality of land portions (blocks) 17A, 17B, and 18. The land portions 17A are central land portions located in the tire center. The land portions 17B are outer land portions located axially outside of the central land portions 17A. And the land portions 18 are shoulder-side land portions located axially outside of the outer land portions 17B, respectively.
Formed on the surface of the land portions 17A, 17B, and 18 are a plurality of sipes 19.
The sidewalls 15 are rubber members extending in the side regions of the tire from the ends of the tread 14 covering the carcass layer 12.
Provided between the tread 14 and the outer belt layer 13b is a belt protection layer 13c which prevents the studs 2 sinking due to the collapse of the rubber below the studs 2 (radially inside of the tire) from piercing the outer belt layer 13b. The belt protection layer 13c is structured with cords of organic fiber or the like.
The stud holes 3 are formed in the shoulder-side land portions 18 and the outer land portions 17B, for instance.
As shown in FIG. 5, the stud 2, having a body section 21, a pin section (sometimes referred to as "tip") 22 disposed at one end along the central axis of the body section 21, and a flange section 23 disposed at the other end along the central axis of the body section 21, is a cylindrical member long along the central axis of the body section 21.
The stud 2 is formed such that the central axis of the body section 21, the central axis of the pin section 22, and the central axis of the flange section 23 are aligned in a continuous straight line. And the continuous straight line constitutes the central axis 2C of the stud 2 (hereinafter referred to simply as "central axis 2C").

The body section 21 has an upper part 21A located on the one-end side along the central axis 2C, an lower part 21B located on the other-end side along the central axis 2C, and a middle part 21C connecting the upper part 21A and the lower part 21B.

The upper part 21A is formed in a cylindrical body having an equal shape of cross section orthogonal to the central axis 2C for the whole length along the central axis 2C.

The lower part 21B is formed in a cylindrical body having an equal shape of cross section orthogonal to the central axis 2C for the whole length along the central axis 2C.

The relationship between the sectional diameter of the upper part 21A and the sectional diameter of the lower part 21B is such that "sectional diameter of upper part 21A > sectional diameter of lower part 21B".

The middle part 21C is formed in an inverted-cone-shape body whose diameter of cross section orthogonal to the central axis 2C gets gradually smaller from the upper part 21A side to the lower part 21B side.

The top-end surface 21t of the body section 21 is formed in a flat surface orthogonal to the central axis 2C or a curved (convex) surface rising toward one end along the central axis 2C or a curved (concave) surface sinking toward the other end along the central axis 2C, for instance.

The pin section 22 is formed in a cylindrical body having an equal shape of cross section orthogonal to the central axis 2C for the whole length.

The top-end surface 22t of the pin section 22 is formed in a flat surface orthogonal to the central axis 2C or a curved (convex) surface rising toward one end along the central axis 2C or a curved (concave) surface sinking toward the other end along the central axis 2C, for instance.

The flange section 23 is so formed as to have the diameter being the greatest at the outer peripheral surface 24 and reducing from the one-end side toward the other-end side along the central axis 2C to connect to the other-end surface. And the maximum peripheral diameter position 24M of the outer peripheral surface 24 of the flange section 23 is located on the pin section 22 side of the position which is at 1/2 of the thickness T of the flange section along the central axis 2C.

As shown in FIG. 4, the stud 2 is embedded with the flange section 23 on the other-end side thereof driven first into the stud hole 3 formed in the surface 14a side of the tread 14 of the tire 1 by a not-shown stud driving machine.

The height of the stud 2 is formed greater than the depth of the stud hole 3. And thus a studdable tire 10 is made with the studs 2 embedded in the surface 14a side of the tread 14.

That is, the studdable tire 10 is arranged such that the flange section 23 and body section 21 of the stud 2 are inserted in the stud hole 3 and the pin section 22 protrudes from the surface 14a of the tread 14. It is to be noted, however, that there are cases where the one-end side of the body section 21 protrudes from the surface 14a of the tread 14 (see FIG. 7B).

The pin section 22 of the stud 2 of the studdable tire 10 is made of a material softer than asphalt and harder than ice (e.g., tungsten carbide) so that it can be ground down when the vehicle is running on an asphalt road and it can bite into ice when the vehicle is running on an icy road. On the other hand, the body section 21 of the stud 2 is made of a material softer than the pin section 22 (e.g., aluminum).

The studdable tire 10 is therefore liable to show a tendency that depending on the rubber forming the tread 14, the wear in the rubber on the surface 14a side of the tread 14 and the one-end side of the body section 21 progresses first while the pin section 22 remains intact without much getting worn. In such a case, the studs 2 can fall off from the stud holes 3 more easily, thus rendering the studdable tire 10 unable to exhibit such performances as edge performance and anti-stud-loss performance.

In a preferred embodiment, therefore, proper rubbers are selected for the rubber for forming the top rubber layer 14T and the rubber for forming the base rubber layer 14B, based on an evaluation formula using a characteristic value of the elasticity of the rubber for the top rubber layer 14T related to the wear depth of the top rubber layer 14T, so as to control the tendency that the wear in the rubber on the surface 14a side of the tread 14 and the one-end side of the body section 21 progresses first while the pin section 22 remains intact without much getting worn.

In this embodiment, it is assumed that when a vehicle fitted with studdable tires 10 travels on a road surface, the wear depth of the stud protruding from the surface 14a of the tread 14 is proportional to the toughness TF, which is the elastic modulus of the rubber of the base rubber layer 14B pressing the stud against the road surface (the value of integral of the tensile strength TB of the rubber at breaking and the elongation EB of the rubber at breaking ?? and inversely proportional to the toughness TF of the rubber of the top rubber layer 14T.

Hence, the evaluation formulas are written as:

$$\text{Wear depth of stud (PO - PB)} = k_1 s \times \text{(toughness TF of rubber of base rubber layer)} \quad \ldots\ldots \quad (1)$$

$$\text{Wear depth of top rubber layer (GO - GB)} = k_1 t \times (1 / \text{toughness TF of top rubber layer}) \quad \ldots\ldots \quad (2)$$

where "wear depth of stud (PO-PB) - "height of stud before wear PO" - "height of stud after wear PB", "wear depth of top rubber layer (GO-GB) - "layer thickness of top rubber layer before wear GO" - "layer thickness of top rubber layer after wear GB", and
$k_1 s, k_1 t$ is a constant.

It is to be noted that PO is the height of the stud 2 from the other-end surface to the one-end (tip) surface of the stud before wear (initial condition) (see FIG. 1A), PB is the height of the stud 2 from the other-end surface to the one-end surface of the stud after wear (see FIG. 1B), GO is the layer thickness of the tread 14 from the other-end surface of the base rubber layer 14B (boundary surface with the belt layer) to the one-end surface (surface) of the top rubber layer before wear (initial condition) (see FIG. 1A), and GB is the layer thickness of the tread 14 from the other-end surface of the base rubber layer 14B to the one-end surface of the top rubber layer after wear (see FIG. 1B).

Then the formulas (1) and (2) are rewritten as:

$$\text{Wear depth of stud / wear depth of rubber of top rubber layer} = k_1 \times \text{(toughness TF of rubber of base rubber layer at room temperature} \times \text{toughness TF of rubber of top rubber layer at room temperature)} \quad \ldots\ldots \quad (3)$$

where $k_1$ is a constant. And the rubber for forming the top rubber layer 14T and the rubber for forming the base rubber layer 14B are selected in such a manner that the above formula (3) produces a value close to 1.

For example, in selecting the rubber for forming the top rubber layer 14T and the rubber for forming the base rubber layer 14B of the tread 14 of a studdable tire 10, the evaluation formula (1) is used:

$$0.5 \leqq \text{wear depth of stud / wear depth of rubber of top rubber layer} = k1 \times \text{(toughness TF of rubber of base rubber layer at room temperature} \times \text{toughness TF of rubber of top rubber layer at room temperature)} \leqq 1.5 \quad \ldots\ldots \quad (1)$$

And the rubbers satisfying the evaluation formula (1) are used as the rubber for forming the top rubber layer 14T and the rubber for forming the base rubber layer 14B of the tread 14 of the studdable tire 10.

For the studdable tire 10 having the tread 14 formed of rubbers satisfying the evaluation formula (1), there may only be a small difference between the wear depth of the stud (PO-PB) and the wear depth of rubber of the top rubber layer 14T of the tread 14 (GO-GB). This will help control the tendency that the rubber on the surface 14a side of the tread 14 wears first and the pin section 22 remains little worn, thus retaining necessary performance over a long period of time.

That is, the studdable tire 10 fabricated with the rubber forming the top rubber layer 14T and the rubber forming the base rubber layer 14B satisfying the evaluation formula (1) features a small difference between the wear depth of the stud (PO-PB) and the wear depth of rubber of the top rubber layer 14T of the tread 14 (GO-GB) . In other words, it is possible to achieve nearly the same rate at which the wear in the rubber on the surface 14a side of the tread 14 progresses and the wear in the one-end side of the stud progresses.

Accordingly, the studdable tire 10, in contrast to the conventional one, controls the tendency that the rubber on the surface side of the tread wears first with the pin section remaining little worn. And thus the studs may not fall out of the stud holes easily, and hence a studdable tire 10 retains performances, such as the edge performance of the studs and anti-stud-loss performance, for a long period of time.

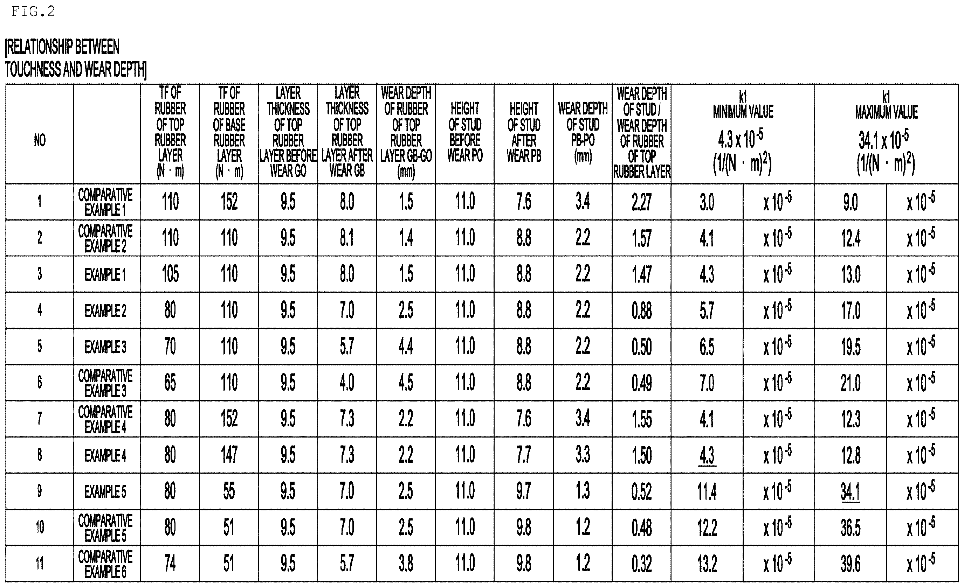

FIG. 2 shows the relationship between toughness and wear depth. A plurality of studdable tires having varied combinations of the toughness TF of the rubber for the base rubber layer and the toughness TF of the rubber for the top rubber layer were prepared. The actual values of "wear depth of stud / wear depth of rubber of top rubber layer" of the studdable tires and the calculated values of minimum value of $k_1$ and maximum value of $k_1$ of the studdable tires were as shown in FIG. 2.

That is, the minimum value of $k_1$, which satisfies "0.5 = $k_1$ × (toughness TF of rubber of base rubber layer at room temperature × toughness TF of rubber of top rubber layer at room temperature)" was calculated for each of the studdable tires of Examples and Comparative Examples shown in FIG. 2. Also, the maximum value of $k_1$, which satisfies "1.5 = $k_1$ × (toughness TF of rubber of base rubber layer at room temperature (23 ° C) × toughness TF of rubber of top rubber layer at room temperature (23°C)) " was calculated for each of the studdable tires of Examples and Comparative Examples shown in FIG. 2.

Then, the minimum value of $k_1$ and the maximum value of $k_1$ were derived for the studdable tires of Examples 1 to 5, which are preferred studdable tires with the actual values of "wear depth of stud / wear depth of rubber of top rubber layer" being within the range of 0.5 to 1.5. That is, the minimum value of $k_1$ was determined to be 4.3 × 10 - 5, and the maximum value of $k_1$ to be 34.1 × 10 - 5.

That is, for the studdable tires of Examples 1 to 5 whose experimentally determined values of "wear depth of stud / wear depth of rubber of top rubber layer" were 0.5 or above and 1.5 or below, the minimum value of $k_1$ (= 4.3 × 10 - 5) which satisfies "0.5 = $k_1$ × (toughness TF of rubber of base rubber layer at room temperature × toughness TF of rubber of top rubber layer at room temperature) " and the maximum value of $k_1$ (= 34.1 × 10 - 5) which satisfies "1.5 = $k_1$ × (toughness TF of rubber of base rubber layer at room temperature × toughness TF of rubber of top rubber layer at room temperature)" are derived. Then, using "$k_1$ = (4.3 × 10 - 5) to (34.1 × 10 - 5)", the rubber for the base rubber layer and the rubber for the top rubber layer are selected from the evaluation formula (1). This makes it possible to achieve nearly the same rate at which the wear in the rubber on the surface 14a side of the tread 14 progresses and the wear in the one-end side of the stud progresses. And a studdable tire capable of retaining performances, such as edge performance and anti-stud-loss performance, for a long time can be provided.

In other words, "wear depth of stud / wear depth of rubber of top rubber layer" is replaced by the evaluation formula "$k_1$ × (toughness TF of rubber of base rubber layer at room temperature × toughness TF of rubber of top rubber layer at room temperature) ". And the rubber for the base rubber layer and the rubber for the top rubber layer are selected that satisfy "0.5 ≦ $k_1$ × (toughness TF of rubber of base rubber layer at room temperature × toughness TF of rubber of top rubber layer at room temperature) ≦ 1.5. As a result, nearly the same rate can be achieved for the progress of wear in the rubber on the surface 14a side of the tread 14 and the progress of wear in the one-end side of the stud. And a studdable tire capable of retaining performances, such as edge performance and anti-stud-loss performance, for a long time can be provided.

In particular, the choice of the rubber for the base rubber layer and the rubber for the top rubber layer is made using $k_1$ of the evaluation formula (= (4.3 × 10 - 5) to (34.1 × 10 - 5) (1 / (N·m) 2). As a result, nearly the same rate can be achieved for the progress of wear in the rubber on the surface 14a side of the tread 14 and the progress of wear in the one-end side of the stud. And a studdable tire capable of retaining performances, such as edge performance and anti-stud-loss performance, for a long time can be provided.

It has also been assumed herein that when a vehicle fitted with studdable tires 10 travels on a road surface, the wear depth of the stud protruding from the surface 14a of the tread 14 is proportional to the dynamic tensile elastic modulus (Young's modulus) E', which is the elastic modulus of the rubber of the base rubber layer 14B pressing the stud against the road surface and inversely proportional to the dynamic tensile elastic modulus E' of the rubber of the top rubber layer 14T.

Hence, the evaluation formulas may also be written as:

$$\text{Wear depth of stud } (PO - PB) = k_2 s \times (\text{dynamic tensile elastic modulus } E' \text{ of rubber of base rubber layer)} \quad \ldots\ldots \quad (1)'$$

$$\text{Wear depth of top rubber layer (GO} - \text{GB)} = k_2 t \times (1 \, / \, \text{dynamic}$$

$$\text{tensile elastic modulus E' of top rubber layer)} \quad \ldots \ldots \quad (2)'$$

where $k_2 s, k_2 t$ is a constant.

Then the formulas (1)' and (2)' are rewritten as:

$$\text{Wear depth of stud / wear depth of rubber of top rubber layer}$$

$$= k_2 \times (\text{dynamic tensile elastic modulus E' of rubber of base}$$

$$\text{rubber layer at room temperature} \times \text{dynamic tensile elastic}$$

$$\text{modulus E' of rubber of top rubber layer at room}$$

$$\text{temperature)} \quad \ldots \ldots \quad (3)'$$

where $k_1$ is a constant. And the rubber for forming the top rubber layer 14T and the rubber for forming the base rubber layer 14B are selected in such a manner that the above formula (3)' produces a value close to 1.

For example, in selecting the rubber for forming the top rubber layer 14T and the rubber for forming the base rubber layer 14B of the tread 14 of a studdable tire 10, the evaluation formula (1)' is used:

$$0.5 \leqq \text{wear depth of stud / wear depth of rubber of top rubber}$$

$$\text{layer} = k_2 \times (\text{dynamic tensile elastic modulus E' of rubber of base}$$

$$\text{rubber layer at room temperature} \times \text{dynamic tensile elastic}$$

$$\text{modulus E' of rubber of top rubber layer at room temperature)} \leqq$$

$$1.5 \quad \ldots \ldots \quad (1)'$$

And the rubbers satisfying the evaluation formula (1)' are used as the rubber for the top rubber layer 14T and the rubber for the base rubber layer 14B of the tread 14 of the studdable tire 10.

For the studdable tire 10 having the tread 14 formed of rubbers satisfying the evaluation formula (1)', there may only be a small difference between the wear depth of the stud (PO-PB) and the wear depth of rubber of the top rubber layer 14T of the tread 14 (GO-GB). This will help control the tendency that the rubber on the surface 14a side of the tread 14 wears first and the pin section 22 remains little worn, thus retaining necessary performance over a long period of time.

That is, the studdable tire 10 fabricated with the rubber forming the top rubber layer 14T and the rubber forming the base rubber layer 14B satisfying the evaluation formula (1)' features a small difference between the wear depth of the stud (PO-PB) and the wear depth of rubber of the top rubber layer 14T of the tread 14 (GO-GB) . In other words, it is possible to achieve nearly the same rate at which the wear in the rubber on the surface 14a side of the tread 14 progresses and the wear in the one-end side of the stud progresses.

Accordingly, the studdable tire 10, in contrast to the conventional one, controls the tendency that the rubber on the surface side of the tread wears first with the pin section remaining little worn. And thus the studs may not fall out of the stud holes easily, and hence a studdable tire 10 thus fabricated can retain performances, such as the edge performance of the studs and anti-stud-loss performance, for a long time.

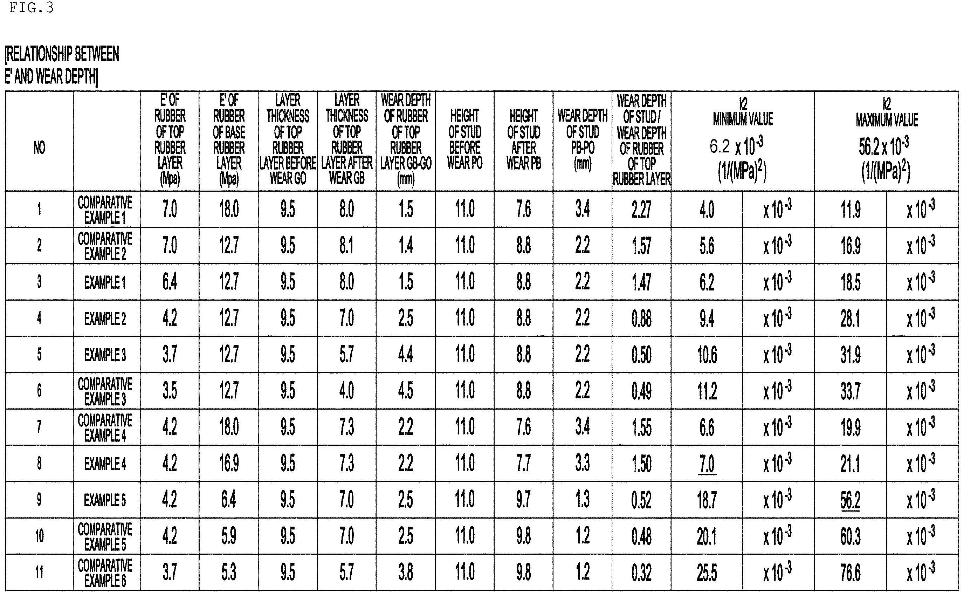

FIG. 3 shows the relationship between dynamic tensile elastic modulus E' and wear depth. A plurality of studdable tires having varied combinations of the dynamic tensile elastic modulus E' of the rubber of the base rubber layer and the dynamic tensile elastic modulus E' of the rubber of the top rubber layer were prepared. The actual values of "wear depth of stud / wear depth of rubber of top rubber layer" of the studdable tires and the calculated values of minimum value of $k_2$ and maximum value of $k_2$ of the studdable tires were as shown in FIG. 3.

That is, the minimum value of $k_2$, which satisfies "0.5 = $k_2$ × (dynamic tensile elastic modulus E' of rubber of base rubber layer at room temperature (23°C) × dynamic tensile elastic modulus E' of rubber of top rubber layer at room temperature (23 °C))" was calculated for each of the studdable tires of Examples and Comparative Examples shown in FIG. 3. Also, the maximum value of $k_2$, which satisfies "1.5 = $k_1$ × (dynamic tensile elastic modulus E' of rubber of base rubber layer at room temperature × dynamic tensile elastic modulus E' of rubber of top rubber layer at room temperature)" was calculated for each of the studdable tires of Examples and Comparative Examples shown in FIG. 3.

Then, the minimum value of $k_2$ and the maximum value of $k_2$ were derived for the studdable tires of Examples 1 to 5, which are preferred studdable tires with the actual values of "wear depth of stud / wear depth of rubber of top rubber layer" being within the range of 0.5 to 1.5. That is, the minimum value of $k_2$ was determined to be 6.2 × 10 - 3, and the maximum value of $k_2$ to be 56.2 × 10 - 3.

That is, for the studdable tires of Examples 1 to 5 whose experimentally determined values of "wear depth of stud / wear depth of rubber of top rubber layer" are 0.5 or above and 1.5 or below, the minimum value of $k_2$ (= 6.2 × 10 - 3) which satisfies "0.5 = $k_2$ × (dynamic tensile elastic modulus E' of rubber of base rubber layer at room temperature × dynamic tensile elastic modulus E' of rubber of top rubber layer at room temperature)" and the maximum value of $k_2$ (= 56.2 × 10 - 3) which satisfies "1.5 = $k_2$ × (dynamic tensile elastic modulus E' of rubber of base rubber layer at room temperature × dynamic tensile elastic modulus E' of rubber of top rubber layer at room temperature)" are derived. Then, using "$k_2$ = (6.2 × 10 - 3) to (56.2x 10 - 3)", the rubber for the base rubber layer and the rubber for the top rubber layer are selected from the evaluation formula (1)'. This makes it possible to achieve nearly the same rate for the progress of wear in the rubber on the surface 14a side of the tread 14 and the progress of wear in the one-end side of the stud. And a studdable tire capable of retaining performances, such as edge performance and anti-stud-loss performance, for a long time can be provided.

In other words, "wear depth of stud / wear depth of rubber of top rubber layer" is replaced by the evaluation formula "$k_2$ × (dynamic tensile elastic modulus E' of rubber of base rubber layer at room temperature × dynamic tensile elastic modulus E' of rubber of top rubber layer at room temperature) ". And the rubber for the base rubber layer and the rubber for the top rubber layer are selected that satisfy "0.5 ≦ $k_2$ × (dynamic tensile elastic modulus E' of rubber of base rubber layer at room temperature × dynamic tensile elastic modulus E' of rubber of top rubber layer at room temperature) ≦ 1.5. As a result, nearly the same rate can be achieved for the progress of wear in the rubber on the surface 14a side of the tread 14 and the progress of wear in the one-end side of the stud. And a studdable tire capable of retaining performances, such as edge performance and anti-stud-loss performance, for a long time can be provided.

In particular, the choice of the rubber for the base rubber layer and the rubber for the top rubber layer is made using $k_2$ of the evaluation formula (= (6.2 × 10 - 3) to (56.2 × 10 - 3) (1 / (MPa) 2) . As a result, it is possible to achieve nearly the same rate for the progress of wear in the rubber on the surface 14a side of the tread 14 and the progress of wear in the one-end side of the stud. And a studdable tire capable of retaining performances, such as edge performance and anti-stud-loss performance, for a long time can be provided.

It is to be noted that investigations have been conducted on 50% modulus, 300% modulus, tensile strength TB at breaking, elongation EB at breaking, toughness TF at breaking, dynamic ensile elastic modulus E', shear elastic modulus G' , compressive elastic modulus K' , and many other elastic moduli at temperatures ranging from -50°C up to the maximum temperature of 200°C at curing. And it has been found that the progress of wear in the tread rubber and in the stud can be controlled the most reliably if the elastic modulus of toughness TF or dynamic ensile elastic modulus E' at room temperature of 23°C is set in an optimal range.

Also, control by toughness TF may be desirable, but the toughness TF is the value of integral of tensile strength TB at breaking and elongation EB at breaking. Thus harder material may hinder elongation while softer material may hasten elongation, and the toughness TF does not change much. This makes it harder to control by toughness TF. For the ease of control, therefore, dynamic tensile elastic modulus E' is more advantageous. ??

That is, as described above, "k × (elastic modulus of rubber of base rubber layer at room temperature × elastic modulus of rubber of top rubber layer at room temperature) " is calculated in selecting the rubber forming the top rubber layer 14T and the rubber forming the base rubber layer 14B of the tread 14. And combinations of rubbers for which the calculating formula produces values close to 1 are estimated to be desirable combinations. The arrangement is therefore such that the combination of the base rubber layer and the top rubber layer is estimated to be desirable if the calculated value multiplied by the coefficient k within a certain value range is 0.5 to 1.5 irrespective of any values taken by "elastic modulus of rubber of base rubber layer at room temperature × elastic modulus of rubber of top rubber layer at room temperature".

For example, in designing a studdable tire for the first time, only data necessary is the elastic modulus of rubber of the base rubber layer at room temperature and the elastic modulus of rubber of the top rubber layer at room temperature to build a tire without the knowledge of the actual wear depth of the stud and the actual wear depth of rubber for the top rubber layer. It is only necessary to select a combination of the rubber for the base rubber layer and the rubber of the top rubber layer such that the value X obtained by calculating "k × (elastic modulus of rubber of base rubber layer at room temperature × elastic modulus of rubber of top rubber layer at room temperature)" satisfies "0.5 ≦ X ≦ 1.5. This will make the difference between the wear depth of the stud (PO-PB) and the wear depth of rubber of the top rubber layer 14T of the tread 14 (GO-GB) small. And it is possible to easily design a studdable tire capable of retaining performances, such as edge performance and anti-stud-loss performance, over a long period of time.

Also, a tire 1 is first cured with the stud hole molding projections, which protrude from a not-shown tire mold, inserted from the surface side of the tread of the pre-curing tire into the inside of the tread. Then, after the curing of the tire, the stud hole molding projections are removed (demolded) from the tread to form the stud holes 3. When demolding the stud hole molding projections from the tread, cracks can run in the tread rubber from the inner peripheral surface of the stud hole, caused by the withdrawal resistance that works when pulling the stud hole molding projections out of the tread. This requires us to come up with the shape of the stud hole molding projections which makes demolding easier.

However, making the shape of the stud hole molding projections easier to demold can make the loss of studs 2 fitted in the stud holes 3 easier, too.

That is, in use, the studdable tires 10 are desirable if they feature good anti-stud-loss performance, which makes the loss of studs 2 harder to occur. In the curing of the tires, however, they are desired to show good demolding performance, which makes the demolding of the stud hole molding projections from the tread 14 easier without causing cracks in the tread rubber at the time of demolding.

However, the anti-stud-loss performance and the demolding performance are mutually exclusive performances, and it has been difficult to satisfy both the performances at the same time.

In the first embodiment of the present invention, therefore, the shape of the stud hole 3 is so formed as to achieve both good anti-stud-loss performance and good demolding performance at the same time.

As shown in FIG. 4B, the stud hole 3 is formed as a hole extending from the surface 14a side of the tread 14 of the tire 1 toward the center (center axis of rotation of the tire 1) in the circle of the tire 1.

The stud hole 3 has an opening side part 31 opening on the surface 14a of the tread 14 provided on the one-end side along the central axis 3C of the stud hole 3 and a bottom-side part 32 provided on the other-end side along the central axis 3C of the stud hole 3.

It is to be noted that the central axis 3C of the stud hole 3 refers to the central axis of the hole extending in the tire radial direction of the hole for stud 2 insertion or diagonal with respect to the tire radial direction, that is, the central axis passing through the median point in the cross-sectional shape of the hole orthogonal to the tire diameter direction (virtual median point in the cross-sectional shape of the hole which is actually a space).

The opening side part 31 is formed as a funnel-shaped hole. That is, the opening side part 31 has an opening area 34 formed in an inverted cone shape whose diameter reduces gradually from the surface 14a side of the tread 14 toward the hole bottom surface 35 of the stud hole 3 and a middle area 33 cylindrical in shape connecting the opening area 34 to the bottom side part 32.

The cross-sectional shape of the inner peripheral surface 36 of the stud hole 3 intersecting with the plane orthogonal to the central axis 3C of the stud hole 3 is a circle.

Also, the boundary between the inner peripheral surface (inner wall surface) 36 of the stud hole 3 and the hole bottom surface 35 of the stud hole 3 is formed in a curved surface.

The hole bottom surface 35 of the stud hole 3 is a surface forming the flat surface of the bottom of the stud hole 3. It is formed as a flat surface orthogonal to the central axis 3C at the deepest position of the stud hole 3.

The size relationship between the opening diameter of the opening 3t of the opening area 34 opening on the surface 14a of the tread 14, the cross-sectional diameter of the middle area 33, and the cross-sectional diameter of the bottom side part 32 is such that "opening diameter of the opening 3t of the opening area 34 > cross-sectional diameter of the bottom side part 32 > cross-sectional diameter of the middle area 33".

The stud holes 3 are molded by curing the tire with the not-shown stud hole molding projections corresponding in shape to the stud holes 3 inserted in the tread of the tire before curing and removing (demolding) the stud hole molding projections out of the tread after the curing of the tire.

The surface of the inner peripheral surface 36 of the bottom side part 32 extending along the central axis 3C of the stud hole 3 is formed in a curved surface swelling outward away from the central axis 3C.

And the position 36M of the maximum diameter C in the cross section of the inner peripheral surface 36 of the bottom side part 32 intersecting with a plane orthogonal to the central axis 3C of the stud hole 3 is located on the hole bottom surface 35 side of the intermediate position 39 between the boundary position 37 of the opening side part 31 and the bottom side part 32 and the hole bottom surface 35.

Also, the inner peripheral surface 36 of the bottom side part 32 is formed such that the curvature radius R1 of the opening-side curved surface 41, which is positioned between the maximum diameter C position 36M and the boundary position 37 and curved along the central axis 3C of the stud hole 3 is greater than the curvature radius R2 of the bottom-side curved surface 42, which is positioned between the maximum diameter C position 36M and the hole bottom surface 35 of the bottom side part 32 and curved along the central axis 3C of the stud hole 3.

In other words, it is so arranged that the curvature radius of the bottom-side curved surface 42 is greater than the curvature radius of the opening-side curved surface 41 (the curve of the bottom-side curved surface 42 being more acute than the curve of the opening-side curved surface 41).

It is to be noted that the curvature radii of the inner peripheral surfaces and curved surfaces mentioned herein refer to the curvature radii of line segments running along the lateral surfaces in the depth direction of the stud hole 3 when the cross section of the stud hole 3 including the central axis 3C of the stud hole 3 is viewed from the side.

In this manner, the maximum diameter C position 36M of the inner peripheral surface 36 of the bottom side part 32 is located on the hole bottom surface 35 side of the intermediate position 39 between the boundary position 37 of the opening side part 31 and the bottom side part 32 and the hole bottom surface 35. Therefore, the inner peripheral surface 36 closer to the opening side part 31 of the bottom side part 32 of the stud hole 3 can be formed such that the curvature radius R1 of the curved surface (opening-side curved surface 41) extending along the central axis 3C of the stud hole 3 positioned between the maximum diameter C position 36M and the boundary position 37 in such a manner as to connect the boundary position 37 to the maximum diameter C position 36M is greater than the curvature radius R2 of the curved surface (bottom-side curved surface 42) extending along the central axis 3C of the stud hole 3 positioned between the maximum diameter C position 36M and the hole bottom surface 35 in such a manner as to connect the hole bottom surface 35 of the stud hole 3 to the maximum diameter C position 36M. As a result, it is possible to reduce the withdrawal resistance of the stud hole molding projections 51 when they are pulled out from the opening-side curved surface 41 with a larger curvature radius extending along the central axis 3C of the stud hole 3 positioned between the maximum diameter C position 36M and the boundary position 37. ? This makes it easier to remove (demold) the stud hole molding projections 51 and thus prevents cracks from occurring in the tread 14. On the other hand, the bottom-side curved surface 42 with a smaller curvature radius on the bottom side extending along the central axis 3C of the stud hole 3 positioned between the maximum diameter C position 36M and the hole bottom surface 35 increases the holding force for holding the flange section 23 of the stud 2 fitted in the stud hole 3. This makes it harder for the studs 2 to fall out of the stud holes 3 in the studdable tires 10 in use. That is, a tire featuring both good demolding performance at curing and good anti-stud-loss performance in use can be provided. In other words, the tire 1 can be provided with stud holes 3 featuring good anti-stud-loss performance, which are molded using stud hole molding projections featuring good demolding performance.

It is to be noted that the stud holes 3 featuring both good demolding performance and good anti-stud-loss performance can be formed when the positional range of the maximum diameter C position 36M = d2 = d1/d is 0.5 < d1/d < 0.9, or more preferably, 0.5 < d1/d < 0.7, where d is the distance between the hole bottom surface 35 and the boundary position 37, or the height of the bottom side part 32, d1 is the distance between the boundary position 37 and the maximum diameter C position 36M, and d2 is the distance between the hole bottom surface 35 and the maximum diameter C position 36M. As a result, stud holes 3 featuring both good demolding performance and good anti-stud-loss performance can be formed.

Also, the value range selected for the ratio C/B between the maximum diameter C of the bottom side part 32 and the diameter B of the middle area 33 is $1.0 \leqq C/B \leqq 1.6$. Accordingly, stud holes 3 featuring both good demolding performance and good anti-stud-loss performance can be formed. Too small C/B will compromise anti-stud-loss performance, whereas too large C/B will compromise demolding performance. In the preferred embodiment, therefore, $1.0 \leqq C/B \leqq 1.6$ is employed because C/B smaller than 1.0 was found to lower anti-stud-loss performance and C/B larger than 1.6 to lower demolding performance.

The value range selected for the ratio R1/R2 between the curvature radius R1 of the opening-side curved surface 41 and the curvature radius R2 of the bottom-side curved surface 42 is $1.5 \leqq R1/R2 \leqq 100$, and more preferably $2 \leqq R1/R2 \leqq 10$.

The curvature radius R2 of the bottom-side curved surface 42, when it is small, little affects the demolding performance. But too small a curvature radius R2 may turn the bottom-side curved surface 42 into a sharply-angled corner, and cracks can run from the corner portion. On the other hand, too large a curvature radius R2 may result in an insufficient holding force for holding the flange section 23 of the stud 2, thus compromising the anti-stud-loss performance.

Therefore, the curvature radius R1 of the opening-side curved surface 41 is set in such a manner as to improve the demolding performance. And at the same time, in the relationship with the curvature radius R1, the value range selected for the ratio R1/R2 is $1.5 \leqq R1/R2 \leqq 100$, and more preferably $2 \leqq R1/R2 \leqq 10$. This enables the formation of stud holes 3 featuring both good demolding performance and good anti-stud-loss performance.

That is, if R1/R2 is smaller than 1.5, the anti-stud-loss performance will be compromised. And if R1/R2 is larger than 100, then the bottom-side curved surface 42 will be turned into a sharply-angled corner, and cracks may be more likely to occur from the corner portion. Thus, the value range is selected such that $1.5 \leqq R1/R2 \leqq 100$. And to obtain stud holes 3 capable of improving the anti-stud-loss performance and preventing the occurrence of cracks, the value range selected for R1/R2 is $2 \leqq R1/R2 \leqq 10$.

Also, the hole bottom surface 35 is formed as a flat surface orthogonal to the central axis 3C. This improves the molding accuracy of stud holes 3 by raising the stability of placement of the stud hole molding projections relative to the tread before curing.

Moreover, the ratio between the elastic modulus Mn1 of the rubber (base rubber) forming the base rubber layer

14B at room temperature and the elastic modulus Mn2 thereof at curing (= Mn2/Mn1) is made smaller than the ratio between the elastic modulus Mn3 of the rubber (top rubber) forming the top rubber layer 14T at room temperature and the elastic modulus Mn4 thereof at curing (= Mn4/Mn3). That is, the evaluation value (= (Mn2/Mn1) / (Mn4/Mn3) being smaller than 1 makes the elastic modulus Mn2 of the base rubber at curing smaller than the elastic modulus Mn1 of the base rubber at room temperature, which improves the demolding performance.

In other words, the rubber forming the base rubber layer 14B is a rubber harder at room temperature and softer at curing than the rubber forming the top rubber layer 14T.

It is to be noted that "room temperature" is 10 to 40°C, and 23°C is used herein. This temperature, which is the temperature for ordinary use of tires on icy or snowy roads has much bearing on the anti-stud-loss performance.

Also, "temperature at curing" is 100 to 200°C, and 100° C is used herein. This temperature, which is the temperature immediately after the curing of green rubber, has much bearing on the demolding performance.

To test the demolding performance and anti-stud-loss performance of a plurality of studdable tires, a plurality of test tires featuring different values of "evaluation value = elastic modulus of base rubber at curing (100°C) / elastic modulus of base rubber at room temperature (23°C)/ elastic modulus of top rubber at curing (100°C) / elastic modulus of top rubber at room temperature (23°C)= (Mn2/Mn1) / (Mn4/Mn3)" were prepared. And they were subjected to the tests of demolding performance when stud holes 3 are molded in these tires and the tests of anti-stud-loss performance when the studs 2 are fitted in the stud holes 3 in these tires.

FIG. 5A shows the test results when 50% modulus (M50) is used as the elastic moduli Mn1 to Mn4. FIG. 5B shows the test results when 300% modulus (M300) is used as the elastic moduli Mn1 to Mn4. FIG. 6A shows the test results when toughness TF is used as the elastic moduli Mn1 to Mn4. FIG. 6B shows the test results when dynamic tensile elastic modulus (Young's modulus) E' is used as the elastic moduli Mn1 to Mn4. FIG. 7A shows the test results when tensile strength TB at breaking is used as the elastic moduli Mn1 to Mn4. FIG. 7B shows the test results when elongation EB at breaking is used as the elastic moduli Mn1 to Mn4.

It is to be noted that the demolding performance and the anti-stud-loss performance as shown in FIGS. 5 to 7 are the indices calculated for the tires of Comparative Example 1 and Examples 1 to 3 calculated relative to 100, which represents evaluation results of the demolding performance and the anti-stud-loss performance of the tire of Comparative Example 2. ? The larger the indices, the better the demolding performance and the anti-stud-loss performance are.

From the test results, it is found that the tire of Comparative Example 1 whose evaluation value = (Mn2/Mn1) / (Mn4/Mn3) is larger than 1 showed the demolding performance lower than that of the tire of Comparative Example 2. On the other hand, the tires of Examples 1 to 3 whose evaluation value = (Mn2/Mn1) / (Mn4/Mn3) is smaller than 1 showed the demolding performance better than that of the tire of Comparative Example 2.

It is to be noted that the demolding performance can be most accurately determined by evaluating the evaluation value = (Mn2/Mn1) / (Mn4/Mn3) using the 50% modulus (M50) as the elastic modulus. ?

Also, the dynamic tensile elastic modulus E' was measured using the spectrometer of Ueshima Seisakusho under the conditions of dynamic strain of 1% and frequency of 52 Hz. The larger the value of dynamic tensile elastic modulus E', the higher the elasticity is.

Further, for the results of 50% modulus (M50), based on JIS K6251-2010, the 50% tensile stress (50% modulus) was measured as the elastic modulus at room temperature of 23°C of JIS K6250-6.1 (standard temperature of testing laboratory), and the elastic modulus at curing was measured at 100°C selected from JIS K6250-11.2.2 (other testing temperatures).

Also, the boundary surface 14X between the top rubber layer 14T and the base rubber layer 14B was set on the side of the surface 14a of the tread 14 of the boundary position 37 between the opening side part 31 and the bottom side part 32 of the stud hole 3.

More specifically, the position of the boundary surface 14X was set between position X1, which is distance d apart from the hole bottom surface 35 toward the surface 14a of the tread 14, and position X2, which is distance twice d apart from the hole bottom surface 35 toward the surface 14a of the tread 14, in which distance d is the distance between the hole bottom surface 35 and the boundary position 37.

In other words, the boundary surface 14X between the top rubber layer 14T and the base rubber layer 14B is set on the side of the surface 14a of the tread 14 of the position X1, which is the height (= distance d) of the bottom side part 32 from the hole bottom surface 35 of the stud hole 3, and on the side of position X1 of X2, which is positioned twice the height d of the bottom side part 32 from the hole bottom surface 35 toward the surface 14a of the tread 14.

That is, the arrangement is such that the distance d3 between the boundary surface 14X and the boundary position 37 along the central axis 3C of the stud hole 3 is shorter than the height (= distance d) the bottom side part 32 of the stud hole 3 along the central axis 3C.

That is, the rubber selected for forming the base rubber layer 14B is a rubber harder at room temperature and softer at curing than the rubber forming the top rubber layer 14T. This allows the anti-stud-loss performance of a studdable tire 10 used at room temperature to be retained and improves the demolding performance at demolding after tire curing.

Also, the part of a studdable tire 10 with studs 2 fitted in the stud holes 3 which is subject to the greatest stress during usage is the boundary position 37 between the opening side part 31 and the bottom side part 32 of the stud hole 3. In the present embodiment, the boundary surface 14X between the top rubber layer 14T and the base rubber layer 14B was set on the side of the surface 14a of the tread 14 of the boundary position 37 between the opening side part 31 and the bottom side part 32 of the stud hole 3. This means that the boundary surface 14X is not located at the boundary position 37 where the greatest stress works during use of the studdable tire 10, and thus the boundary surface 14X is not subject to large stress. As a result, the rubber does not develop fracture at the boundary surface 14X, and the anti-stud-loss performance improves.

Also, the part which is subject to the greatest stress at demolding is the position on the side of the opening 3t of the stud hole 3 of the position X2, which is the height d of the bottom side part 32 apart from the boundary position 37 between the opening side part 31 and the bottom side part 32 of the stud hole 3. Therefore, the boundary surface 14X is not located at this part, and thus the boundary surface 14X is not subject to large stress at demolding. As a result, the rubber does not develop fracture at the boundary surface 14X, and the demolding performance improves.

In actuality, the part which is subject to the greatest stress at demolding is near the position X2. In this embodiment, therefore, the boundary surface 14X is set on the side of position X1 of the intermediate position between the positions X1 and X2. As a result, it is more difficult for the rubber to develop fracture at the boundary surface 14X, and the demolding performance improves.

As is clear from the description so far, a preferred embodiment of a tire 1 according to the present invention is so arranged as follows. The stud holes 3 for stud insertion provided on the surface 14a side of the tread 14 each have an opening side part 31 opening on the surface 14a of the tread 14 and a bottom side part 32. The value range selected for the ratio C/B between the maximum diameter C of the bottom side part 32 and the diameter B of the middle area 33 is $1.3 \leqq C/B \leqq 1.6$. The position 36M of the maximum diameter C of the bottom side part 32 is located on the hole bottom surface 35 side of the intermediate position 39 between the boundary position 37 of the opening side part 31 and the bottom side part 32 and the hole bottom surface 35. And the boundary between the inner peripheral surface (inner wall surface) and the hole bottom surface 35 is formed in a curved surface. The curvature radius R1 of the opening-side curved surface 41 extending along the central axis 3C of the stud hole 3 connecting the boundary position 37 and the maximum diameter C position 36M is greater than the curvature radius R2 of the bottom-side curved surface 42 extending along the central axis 3C of the stud hole 3 connecting the hole bottom surface 35 and the maximum diameter C position 36M. Also, the boundary surface 14X between the top rubber layer 14T and the base rubber layer 14B, which constitute the tread 14, is set on the side of the surface 14a of the tread 14 of the boundary position 37 between the opening side part 31 and the bottom side part 32 of the stud hole 3. And the rubber selected for forming the base rubber layer 14B is a rubber harder at room temperature and softer at curing than the rubber forming the top rubber layer 14T.

It is to be noted that the description of the first embodiment has been given of an example of the stud hole 3 having the cross-sectional shape of the inner peripheral surface 36 intersecting with a plane orthogonal to the central axis 3C being a circle. However, the stud hole may have a cross-sectional shape other than a circle. For example, the cross-sectional shape, which is not subject to any particular limitation, may be elliptical, triangular, square, or of other shapes.

Also, the shape of the cross section of the stud hole 3 along the central axis 3C (cross section sectioned by a plane including the central axis 3C of the stud hole 3) may be of different shapes on the left and right with respect to the central axis 3C at the center.

Also, the stud to be used may have a cross-sectional shape orthogonal to the central axis formed in a shape corresponding to the cross-sectional shape of the stud hole.

Also, the top rubber layer and the base rubber layer may each be a layer consisting of a plurality of rubber types, not necessarily a single layer consisting of a single rubber type. This is because the present invention holds its own as long as the top rubber layer and the base rubber layer satisfy the positional relationship of their elastic moduli at the boundary surface where they are adjacent to each other.

Also, it is not necessary that the curvature radius of the opening-side curved surface and the curvature radius of the bottom-side curved surface are each a single curvature radius. That is, the opening-side curved surface and the bottom-side curved surface may each be a curved surface having a plurality of curvature radii and may be a curved surface having straight line portions in parts (e.g., midway, at the starting or ending portion).

The studdable tire according to the present invention has stud holes for stud insertion on the surface side of the tread and studs inserted in the stud holes . The tread of the tire consists of a top rubber layer forming the surface layer thereof and a base rubber layer located adjacent to the top rubber layer on the radially inner side thereof. The studs each have a body section, a pin section disposed at one end of the body section along the central axis thereof, and a flange section disposed at the other end of the body section along the central axis thereof. And the pin section of the stud protrudes from the surface of the tread. And for this studdable tire, the rubber for forming the top rubber layer and the rubber for forming a base rubber layer of the tread are so selected as to satisfy the following evaluation formula (1) :

$$0.5 \leqq \text{wear depth of stud / wear depth of rubber of top rubber layer} = k \times (\text{elastic modulus of rubber of base rubber layer at room temperature} \times \text{elastic modulus of rubber of top rubber layer at room temperature}) \leqq 1.5 \qquad \ldots\ldots (1)$$

where "wear depth of stud" = "height of stud before wear" - "height of stud after wear", "wear depth of rubber of top rubber layer" = "layer thickness of tread before wear" - "layer thickness of tread after wear", and (k is a constant). Therefore, it is possible to control the tendency that the rubber on the surface side of the tread wear first and the pin section remains little worn. And the studs may not fall off the stud holes easily, and thus a studdable tire capable of retaining performances, such as edge performance of the studs and anti-stud-loss performance, can be provided.

Also, the constant $k_1$ of the toughness TF satisfies:

$$k_1 = (4.3 \times 10 - 5) \text{ to } (34.1 \times 10 - 5) \ (1/(\text{N} \cdot \text{m}) \ 2)$$

where the toughness TF is the elastic modulus of the rubber of the base rubber layer at room temperature and the elastic modulus of the rubber of the top rubber layer at room temperature. Hence, as described above, a studdable tire capable of retaining performances, such as edge performance and anti-stud-loss performance, over a long period of time can be provided.

Also, the constant $k_2$ of the dynamic tensile elastic modulus E' satisfies:

$$k_2 = (6.2 \times 10 - 3) \text{ to } (56.2 \times 10 - 3) \ (1/(\text{MPa}) \ 2)$$

where the dynamic tensile elastic modulus E' is the elastic modulus of the rubber of the base rubber layer at room temperature and the elastic modulus of the rubber of the top rubber layer at room temperature. Hence, as described above, a studdable tire capable of retaining performances, such as edge performance and anti-stud-loss performance, over a long period of time can be provided.

Also, the stud holes each have an opening side part on the one-end side along the central axis of the stud hole, which opens on the surface of the tread, and a bottom side part on the other-end side along the central axis of the stud hole. The ratio between the elastic modulus of the rubber forming the base rubber layer at room temperature and the elastic modulus thereof at curing is made greater than the ratio between the elastic modulus of the rubber forming the top rubber layer at room temperature and the elastic modulus thereof at curing. And the boundary surface between the top rubber layer and the base rubber layer is located on the tread surface side of the boundary position of the opening side part and the bottom side part of the stud hole. And the rubber forming the base rubber layer shows characteristics of being harder at room temperature and softer at curing than the rubber forming the top rubber layer. This not only improves demolding performance at demolding in the curing process, but also reinforces anti-stud-loss performance when the studdable tire is in use at room temperature. Moreover, since no great distortion occurs at the boundary surface at demolding and in use of the studdable tire, the rubber becomes less likely to fracture at the boundary surface, thus improving both demolding performance and anti-stud-loss performance.

It is to be noted that elastic moduli of the rubbers at room temperature and during curing can be replaced by 50% modulus (M50), 300% modulus (M300), toughness TF, dynamic ensile elastic modulus E' , tensile strength TB at breaking, or elongation EB at breaking. Also, the temperatures measured of the rubber forming the base rubber layer and the rubber forming the top rubber layer are 23 °C at room temperature and 100°C at curing.

Also, the distance between the boundary surface and the boundary position along the central axis of the stud hole is shorter than the height of the bottom side part of the stud hole along the central axis. Thus no great distortion occurs at the boundary surface at demolding and in use of the studdable tire. And the rubber becomes less likely to fracture at the boundary surface, thus improving both demolding performance and anti-stud-loss performance.

The method for selecting rubbers for forming the top rubber layer and the base rubber layer of the tread of the studdable tire according to the present invention is for the selection of rubbers for the top rubber layer and the base rubber layer of the tread of the studdable tire. The studdable tire has stud holes for stud insertion on the surface side of the tread and studs inserted in the stud holes and the tread having a top rubber layer forming the surface layer of the tread and a base rubber layer positioned adjacent to the top rubber layer on the radially inside thereof. The stud includes a body section, a pin section disposed at one end of the body section along the central axis thereof, and a flange section disposed at the other end of the body section along the central axis thereof. The pin section of the stud fitted in the stud hole protrudes from the surface of the tread. The method comprises selecting rubbers for forming the top rubber layer and the base rubber layer based on the following evaluation formula (1) :

$$0.5 \leqq \text{depth of stud wear/depth of rubber wear of top rubber layer} = k \times (\text{elastic modulus of rubber of base rubber layer at room temperature} \times \text{elastic modulus of rubber of top rubber layer at room temperature}) \leqq 1.5 \quad ...... \quad (1)$$

where "wear depth of stud" = "height of stud before wear" - "height of stud after wear", "wear depth of rubber of top rubber layer" = "layer thickness of tread before wear" - "layer thickness of tread after wear", and (k is a constant). Accordingly, it is possible to control the tendency that the rubber on the surface side of the tread wear first and the pin section remains little worn. And thus the studs may not fall off the stud holes easily, and a studdable tire capable of retaining performances, such as the edge performance of the studs and anti-stud-loss performance, for a long time can be provided. And it has been found that the progress of wear in the stud and rubber can be most effectively controlled when the elastic modulus is the toughness at 23°C or the elastic modulus is the dynamic tensile elastic modulus at 23 °C. ??

Also, the constant $k_1$ of the toughness TF satisfies:

$$k_1 = (4.3 \times 10 - 5) \text{ to } (34.1 \times 10 - 5) \ (1/(N \bullet m) \ 2)$$

where the toughness TF is the elastic modulus of the rubber of the base rubber layer at room temperature and the elastic modulus of the rubber of the top rubber layer at room temperature. As described above, therefore, a studdable tire capable of retaining performances, such as edge performance of studs and anti-stud-loss performance, over a long period of time can be provided.

Also, the constant $k_2$ of the dynamic tensile elastic modulus E' satisfies:

$$k_2 = (6.2 \times 10 - 3) \text{ to } (56.2 \times 10 - 3) \ (1/(MPa) \ 2)$$

where the dynamic tensile elastic modulus E' is the elastic modulus of the rubber of the base rubber layer at room temperature and the elastic modulus of the rubber of the top rubber layer at room temperature. As described above, therefore, a studdable tire capable of retaining performances, such as edge performance of studs and anti-stud-loss performance, over a long period of time can be provided.

Description of Referance Numerals

| 1 | tire |
| 2 | stud |
| 2C | central axis |
| 3 | stud hole |
| 3C | central axis |
| 3t | opening |
| 10 | studdable tire |
| 14 | tread |
| 14a | surface of tread |
| 14B | base rubber layer |

14T    top rubber layer
14X    boundary surface
21     body section
22     pin section
23     flange section
31     opening side part
32     bottom side part
37     boundary position
d      distance

**Claims**

1. A studdable tire (10) having a tread (14) with stud holes (3) for stud (2) insertion on the surface side thereof and studs inserted in the stud holes (3),
the tread (14) consisting of a top rubber layer (14T) forming a surface layer of the tread (14) and a base rubber layer (14B) located adjacent to the top rubber layer (14T) on the radially inner side thereof,
each of the studs having a body section (21), a pin section (22) disposed at one end of the body section (21) along the central axis (2C, 3C) thereof, and a flange section (23) disposed at the other end of the body section (21) along the central axis (2C, 3C) thereof,
the pin section (22) of the stud (2) fitted in the stud hole (3) protruding from the surface of the tread (14a), **characterised in that**
the rubber for forming a top rubber layer (14T) and the rubber for forming a base rubber layer (14B) of the tread (14) satisfy the following evaluation formula (1):

$$0.5 \leqq \text{depth of stud wear / depth of rubber wear of top rubber layer} = kx \text{ (elastic modulus of rubber of base rubber layer at room temperature} \times \text{elastic modulus of rubber of top rubber layer at room temperature)} \leqq 1.5 \qquad \ldots\ldots (1)$$

where

$$\text{``wear depth of stud''} = \text{``height of stud before wear''} - \text{``height of stud after wear''},$$

$$\text{``wear depth of rubber of top rubber layer''} = \text{``layer thickness of tread before wear''} - \text{``layer thickness of tread after wear''},$$

and
(k is a constant).

2. The studdable tire (10) according to claim 1, wherein the constant $k_1$ of the toughness TF satisfies:

$$k_1 = 4.3 \times 10^{-5} \text{ to } 34.1 \times 10^{-5} \quad (1/(Nm)^2)$$

where the toughness TF is the elastic modulus of the rubber of the base rubber layer (14B) at room temperature and the elastic modulus of the rubber of the top rubber layer (14T) at room temperature.

3. The studdable tire (10) according to claim 1, wherein the constant $k_2$ of the dynamic tensile elastic modulus E' satisfies:

$$k_2 = 6.2 \times 10^{-3} \quad \text{to } 56.2 \times 10^{-3}$$
$$(1/(MPa)^2)$$

where the dynamic tensile elastic modulus E' is the elastic modulus of the rubber of the base rubber layer (14B) at room temperature and the elastic modulus of the rubber of the top rubber layer (14T) at room temperature.

4. The studdable tire (10) according to any of claims 1 to 3, wherein the stud hole (3) has an opening side part (31) provided on the one-end side along the central axis (2C, 3C) of the stud hole (3) and opening (3t) on the surface of the tread (14a) and a bottom side part (32) provided on the other-end side along the central axis (2C, 3C) of the stud hole (3),

   the ratio of the elastic modulus of the rubber of the base rubber layer (14B) at room temperature to the elastic modulus thereof at curing is greater than the ratio of the elastic modulus of the elastic modulus of the rubber of the top rubber layer (14T) at room temperature to the elastic modulus thereof at curing, and
   the boundary surface (14X) between the top rubber layer (14T) and the base rubber layer (14B) is located on the tread surface side of the boundary position (37) between the opening side part (31) and the bottom side part (32) of the stud hole (3).

5. The studdable tire (10) according to claim 4, wherein the distance (d) between the boundary surface (14X) and the boundary position (37) along the central axis (2C, 3C) of the stud hole (3) is shorter than the height of the bottom side part (32) of the stud hole (3) along the central axis (2C, 3C).

6. A method for selecting rubbers for forming a top rubber layer (14T) and a base rubber layer (14B) of a tread (14) of a studdable tire (10), the studdable tire (10) having stud holes (3) for stud (2) insertion on the surface side of the tread (14) and studs inserted in the stud holes (3) of the tire (1), the tread (14) having a top rubber layer (14T) forming a surface layer of the tread (14) and a base rubber layer (14B) positioned adjacent to the top rubber layer radially inside of the top rubber layer (14T), the stud (2) including a body section (21), a pin section (22) disposed at one end of the body section (21) along the central axis (2C, 3C) thereof, and a flange section (23) disposed at the other end of the body section (21) along the central axis (2C, 3C) thereof, the pin section (22) of the stud (2) inserted in the stud hole (3) protruding from the surface of the tread (14a), the method comprising:
selecting rubbers for forming the top rubber layer (14T) and the base rubber layer (14B) based on the following evaluation formula (1):

$$0.5 \leqq \text{wear depth of stud /wear depth of rubber of top rubber}$$
$$\text{layer} = kx \text{ (elastic modulus of rubber of base rubber layer at room}$$
$$\text{temperature} \times \text{elastic modulus of rubber of top rubber layer at}$$
$$\text{room temperature)} \leqq 1.5 \quad \ldots\ldots \quad (1)$$

$$\text{where "wear depth of stud = "height of stud before wear"}$$
$$\text{- "height of stud after wear",}$$

$$\text{"wear depth of rubber of top rubber layer" = "layer thickness}$$
$$\text{of tread before wear" - "layer thickness of tread after wear",}$$

and

(k is a constant).

**7.** The method for selecting rubbers for forming a top rubber layer (14T) and a base rubber layer (14B) of a tread of a studdable tire (10) according to claim 6, wherein the constant $k_1$ of the toughness TF satisfies:

$$k_1 = 4.3 \times 10^{-5} \text{ to } 34.1 \times 10^{-5} \ (1/(\text{Nm})^2)$$

where the toughness TF is the elastic modulus of the rubber of the base rubber layer (14B) at room temperature and the elastic modulus of the rubber of the top rubber layer (14T) at room temperature.

**8.** The method for selecting rubbers for forming a top rubber layer (14T) and a base rubber layer (14B) of a tread (14) of a studdable tire (10) according to claim 6, wherein the constant $k_2$ of the dynamic tensile elastic modulus E' satisfies:

$$k_2 = 6.2 \times 10^{-3} \text{ to } 56.2 \times 10^{-3} \ (1/(\text{MPa})^2)$$

where the dynamic tensile elastic modulus E' is the elastic modulus of the rubber of the base rubber layer (14B) at room temperature and the elastic modulus of the rubber of the top rubber layer (14T) at room temperature.

**Patentansprüche**

**1.** Bespikebarer Reifen (10), der eine Lauffläche (14) mit Spikeslöchern (3) zum Einsetzen von Spikes (2) auf der Oberflächenseite derselben und Spikes, die in die Spikeslöcher (3) eingesetzt sind, aufweist,
wobei die Lauffläche (14) aus einer oberen Gummilage (14T), die eine Oberflächenlage der Lauffläche (14) bildet, und einer Basis-Gummilage (14B), die angrenzend an die obere Gummilage (14T) auf der in Radialrichtung inneren Seite derselben angeordnet ist, besteht,
wobei jeder der Spikes eine Körpersektion (21), eine Stiftsektion (22), die an dem einen Ende der Körpersektion (21) entlang der Mittelachse (2C, 3C) desselben angeordnet ist, und eine Flanschsektion (23), die an dem anderen Ende der Körpersektion (21) entlang der Mittelachse (2C, 3C) desselben angeordnet ist, aufweist,
wobei die Stiftsektion (22) des Spikes (2), der in dem Spikesloch (3) eingepasst ist, von der Oberfläche (14a) der Lauffläche vorspringt, **dadurch gekennzeichnet, dass**
der Gummi zum Formen einer oberen Gummilage (14T) und der Gummi zum Formen einer Basis-Gummilage (14B) der Lauffläche (14) die folgende Bewertungsformel (1) erfüllen:

$$0,5 \leqq \text{Tiefe einer Spikesabnutzung} / \text{Tiefe einer Gummiabnutzung der oberen Gummilage} = kx \text{ (Elastizitätsmodul des Gummis der Basis-Gummilage bei Raumtemperatur} \times \text{Elastizitätsmodul des Gummis der oberen Gummilage bei Raumtemperatur)} \leqq 1,5 \qquad (1),$$

wobei „Abnutzungstiefe eines Spikes" = „Höhe des Spikes vor Abnutzung" - „Höhe des Spikes nach Abnutzung",

„Abnutzungstiefe eines Gummis der oberen Gummilage" = „Lagendicke der Lauffläche vor Abnutzung" - „Lagendicke der Lauffläche nach Abnutzung"

und (k eine Konstante ist).

**2.** Bespikebarer Reifen (10) nach Anspruch 1, wobei die Konstante $k_1$ der Zähigkeit TF Folgendes erfüllt:

$$k_1 = 4{,}3 \times 10^{-5} \text{ bis } 34{,}1 \times 10^{-5} \ (1/(\text{Nm})^2),$$

wobei die Zähigkeit TF der Elastizitätsmodul des Gummis der Basis-Gummilage (14B) bei Raumtemperatur und der Elastizitätsmodul des Gummis der oberen Gummilage (14T) bei Raumtemperatur ist.

3. Bespikebarer Reifen (10) nach Anspruch 1, wobei die Konstante $k_2$ des dynamischen Zugelastizitätsmoduls E' Folgendes erfüllt:

$$K_2 = 6{,}2 \times 10^{-3} \text{ bis } 56{,}2 \times 10^{-3} \ (1/(\text{MPa})^2),$$

wobei der dynamische Zugelastizitätsmoduls E' der Elastizitätsmodul des Gummis der Basis-Gummilage (14B) bei Raumtemperatur und der Elastizitätsmodul des Gummis der oberen Gummilage (14T) bei Raumtemperatur ist.

4. Bespikebarer Reifen (10) nach einem der Ansprüche 1 bis 3, wobei das Spikesloch (3) einen öffnungsseitigen Teil (31), der auf der einen Endseite entlang der Mittelachse (2C, 3C) des Spikeslochs (3) bereitgestellt wird und eine Öffnung (3t) auf der Oberfläche der Lauffläche (14a), und einen sohlenseitigen Teil (32), der auf der anderen Endseite entlang der Mittelachse (2C, 3C) des Spikeslochs (3) bereitgestellt wird, aufweist, das Verhältnis des Elastizitätsmoduls des Gummis der Basis-Gummilage (14B) bei Raumtemperatur zu dem Elastizitätsmodul desselben beim Vulkanisieren größer ist als das Verhältnis des Elastizitätsmoduls des Gummis der oberen Gummilage (14T) bei Raumtemperatur zu dem Elastizitätsmodul desselben beim Vulkanisieren, und die Grenzfläche (14X) zwischen der oberen Gummilage (14T) und der Basis-Gummilage (14B) auf der Laufflächenseite der Grenzposition (37) zwischen dem öffnungsseitigen Teil (31) und dem sohlenseitigen Teil (32) des Spikeslochs (3) angeordnet ist.

5. Bespikebarer Reifen (10) nach Anspruch 4, wobei die Entfernung (d) zwischen der Grenzfläche (14X) und der Grenzposition (37) entlang der Mittelachse (2C, 3C) des Spikeslochs (3) kürzer ist als die Höhe des sohlenseitigen Teils (32) des Spikeslochs (3) entlang der Mittelachse (2C, 3C).

6. Verfahren zum Auswählen von Gummis zum Formen einer oberen Gummilage (14T) und einer Basis-Gummilage (14B) einer Lauffläche (14) eines bespikebaren Reifens (10), wobei der bespikebare Reifen (10) Spikeslöcher (3) zum Einsetzen von Spikes (2) auf der Oberflächenseite der Lauffläche (14) und Spikes, die in die Spikeslöcher (3) des Reifens (1) eingesetzt sind, aufweist, wobei die Lauffläche (14) eine obere Gummilage (14T), die eine Oberflächenlage der Lauffläche (14) bildet, und eine Basis-Gummilage (14B), die angrenzend an die obere Gummilage in Radialrichtung innerhalb der oberen Gummilage (14T) angeordnet ist, aufweist, wobei der Spike (2) eine Körpersektion (21), eine Stiftsektion (22), die an dem einen Ende der Körpersektion (21) entlang der Mittelachse (2C, 3C) desselben angeordnet ist, und eine Flanschsektion (23), die an dem anderen Ende der Körpersektion (21) entlang der Mittelachse (2C, 3C) desselben angeordnet ist, aufweist, wobei die Stiftsektion (22) des Spikes (2), der in dem Spikesloch (3) eingepasst ist, von der Oberfläche (14a) der Lauffläche vorspringt, wobei das Verfahren Folgendes umfasst:
Auswählen von Gummis zum Formen der oberen Gummilage (14T) und der Basis-Gummilage (14B) auf Grundlage der folgenden Bewertungsformel (1):

$$0{,}5 \leqq \text{Abnutzungstiefe eines Spikes / Abnutzungstiefe eines Gummis der oberen Gummilage} = kx \ (\text{Elastizitätsmodul des Gummis der Basis-Gummilage bei Raumtemperatur} \times \text{Elastizitätsmodul des Gummis der oberen Gummilage bei Raumtemperatur}) \leqq 1{,}5 \qquad (1),$$

wobei „Abnutzungstiefe eines Spikes" = „Höhe des Spikes vor Abnutzung" - „Höhe des Spikes nach Abnutzung",

„Abnutzungstiefe eines Gummis der oberen Gummilage" = „Lagendicke der Lauffläche vor Abnutzung" - „Lagendicke der Lauffläche nach Abnutzung"

und (k eine Konstante ist).

**7.** Verfahren zum Auswählen von Gummis zum Formen einer oberen Gummilage (14T) und einer Basis-Gummilage (14B) einer Lauffläche eines bespikebaren Reifens (10) nach Anspruch 6, wobei die Konstante $k_1$ der Zähigkeit TF Folgendes erfüllt:

$$k_1 = 4{,}3 \times 10^{-5} \text{ bis } 34{,}1 \times 10^{-5} \ (1/(Nm)^2),$$

wobei die Zähigkeit TF der Elastizitätsmodul des Gummis der Basis-Gummilage (14B) bei Raumtemperatur und der Elastizitätsmodul des Gummis der oberen Gummilage (14T) bei Raumtemperatur ist.

**8.** Verfahren zum Auswählen von Gummis zum Formen einer oberen Gummilage (14T) und einer Basis-Gummilage (14B) einer Lauffläche (14) eines bespikebaren Reifens (10) nach Anspruch 6, wobei die Konstante $k_2$ des dynamischen Zugelastizitätsmoduls E' Folgendes erfüllt:

$$K_2 = 6{,}2 \times 10^{-3} \text{ bis } 56{,}2 \times 10^{-3} \ (1/(MPa)^2),$$

wobei der dynamische Zugelastizitätsmodul E' der Elastizitätsmodul des Gummis der Basis-Gummilage (14B) bei Raumtemperatur und der Elastizitätsmodul des Gummis der oberen Gummilage (14T) bei Raumtemperatur ist.

**Revendications**

**1.** Pneu à clouter (10) présentant une bande de roulement (14) avec des trous de clous (3) pour l'insertion de clous (2) sur le côté de la surface correspondant et des clous insérés dans les trous de clou (3), la bande de roulement (14) étant constituée d'une couche de caoutchouc supérieure (14T) formant une couche de surface de la bande de roulement (14) et une couche de caoutchouc de base (14B) située de manière adjacente à la couche de caoutchouc supérieure (14T) sur le côté radialement interne correspondant, chacun des clous présentant une section de corps (21), une section de broche (22) disposée à une extrémité de la section de corps (21) le long de l'axe central (2C, 3C) correspondant, et une section de bride (23) disposée à l'autre extrémité de la section de corps (21) le long de l'axe central (2C, 3C) correspondant, la section de broche (22) du clou (2) étant adaptée dans le trou de clou (3) saillant de la surface de la bande de roulement (14a), **caractérisé en ce que** le caoutchouc permettant de former une couche de caoutchouc supérieure (14T) et le caoutchouc permettant de former une couche de caoutchouc de base (14B) de la bande de roulement (14) satisfont à la formule d'évaluation suivante (1) :

$$0{,}5 \ \leqq \ \text{profondeur d'usure du clou} / \text{profondeur d'usure du caoutchouc de la}$$
$$\text{couche de caoutchouc supérieure} = kx \ (\text{module d'élasticité du caoutchouc de la couche de}$$
$$\text{caoutchouc de base à la température ambiante} \times \text{module d'élasticité du caoutchouc de la}$$
$$\text{couche de caoutchouc supérieure à la température ambiante}) \ \leqq 1{,}5 \qquad (1)$$

où « la profondeur d'usure du clou » = « la hauteur du clou avant usure » − « la hauteur du clou après usure »,

« la profondeur d'usure du caoutchouc de la couche de caoutchouc supérieure » = « l'épaisseur de couche de bande de roulement avant usure » − « l'épaisseur de couche de la bande de roulement après usure »,

et (k est une constante).

2. Pneu à clouter (10) selon la revendication 1, dans lequel la constante $k_1$ de la résistance TF satisfait :

$$k_1 = 4,3 \times 10^{-5} \text{ à } 34,1 \times 10^{-5} \ (1/(Nm)^2)$$

où la résistance TF est le module d'élasticité du caoutchouc de la couche de caoutchouc de base (14B) à la température ambiante et le module d'élasticité du caoutchouc de la couche de caoutchouc supérieure (14T) à la température ambiante.

3. Pneu à clouter (10) selon la revendication 1, dans lequel la constante $k_2$ du module d'élasticité en traction dynamique E' satisfait :

$$k_2 = 6,2 \times 10^{-3} \text{ à } 56,2 \times 10^{-3} \ (1/(MPa)^2)$$

où le module d'élasticité en traction dynamique E' est le module d'élasticité du caoutchouc de la couche de caoutchouc de base (14B) à la température ambiante et le module d'élasticité du caoutchouc de la couche de caoutchouc supérieure (14T) à la température ambiante.

4. Pneu à clouter (10) selon l'une quelconque des revendications 1 à 3, dans lequel le trou de clou (3) présente une partie latérale d'ouverture (31) ménagée sur le côté à une extrémité le long de l'axe central (2C, 3C) du trou de clou (3) et une ouverture (3t) sur la surface de la bande de roulement (14a) et une partie latérale inférieure (32) ménagée sur le côté de l'autre extrémité le long de l'axe central (2C, 3C) du trou de clou (3),
le rapport entre le module d'élasticité du caoutchouc de la couche de caoutchouc de base (14B) à la température ambiante et le module d'élasticité correspondant lors du durcissement est supérieur au rapport entre le module d'élasticité du module d'élasticité du caoutchouc de la couche de caoutchouc supérieure (14T) à la température ambiante et le module d'élasticité correspondant au durcissement, et
la surface limite (14X) entre la couche de caoutchouc supérieure (14T) et la couche de caoutchouc de base (14B) est située sur le côté de la surface de bande de roulement de la position limite (37) entre la partie latérale d'ouverture (31) et la partie latérale inférieure (32) du trou de clou (3).

5. Pneu à clouter (10) selon la revendication 4, dans lequel la distance (d) entre la surface limite (14X) et la position limite (37) le long de l'axe central (2C, 3C) du trou de clou (3) est plus courte que la hauteur de la partie latérale inférieure (32) du trou de clou (3) le long de l'axe central (2C, 3C).

6. Procédé de sélection de caoutchoucs permettant de former une couche de caoutchouc supérieure (14T) et une couche de caoutchouc de base (14B) d'une bande de roulement (14) d'un pneu à clouter (10), le pneu à clouter (10) présentant des trous de clous (3) pour l'insertion d'un clou (2) sur le côté de surface de la bande de roulement (14) et des clous insérés dans les trous de clous (3) du pneu (1), la bande de roulement (14) présentant une couche de caoutchouc supérieure (14T) formant une couche de surface de la bande de roulement (14) et une couche de caoutchouc de base (14B) positionnée de manière adjacente à la couche de caoutchouc supérieure radialement à l'intérieur de la couche de caoutchouc supérieure (14T), le clou (2) incluant une section de corps (21), une section de broche (22) disposée à une extrémité de la section de corps (21) le long de l'axe central (2C, 3C) correspondant, et une section de bride (23) disposée à l'autre extrémité de la section de corps (21) le long de l'axe central (2C, 3C) correspondant, la section de broche (22) du clou (2) inséré dans le trou de clou (3) saillant de la surface de la bande de roulement (14a), le procédé comprenant :
la sélection de caoutchoucs permettant de former la couche de caoutchouc supérieure (14T) et la couche de caoutchouc de base (14B) sur la base de la formule d'évaluation (1) suivante :

$0{,}5 \leq$ profondeur d'usure du clou / profondeur d'usure du caoutchouc de la couche de caoutchouc supérieure = kx (module d'élasticité du caoutchouc de la couche de caoutchouc de base à la température ambiante × module d'élasticité du caoutchouc de la couche de caoutchouc supérieure à la température ambiante) $\leq 1{,}5$       (1)

où « la profondeur d'usure du clou » = « la hauteur du clou avant usure » − « la hauteur du clou après usure »,

« la profondeur d'usure du caoutchouc de la couche de caoutchouc supérieure » = « l'épaisseur de couche de bande de roulement avant usure » − « l'épaisseur de couche de la bande de roulement après usure »,

et (k est une constante).

**7.** Procédé de sélection de caoutchoucs permettant de former une couche de caoutchouc supérieure (14T) et une couche de caoutchouc de base (14B) d'une bande de roulement d'un pneu à clouter (10) selon la revendication 6, dans lequel la constante $k_1$ de la résistance TF satisfait :

$$k_1 = 4{,}3 \times 10^{-5} \text{ à } 34{,}1 \times 10^{-5} \ (1/(Nm)^2)$$

où la résistance TF est le module d'élasticité du caoutchouc de la couche de caoutchouc de base (14B) à la température ambiante et le module d'élasticité du caoutchouc de la couche de caoutchouc supérieure (14T) à la température ambiante.

**8.** Procédé de sélection de caoutchoucs permettant de former une couche de caoutchouc supérieure (14T) et une couche de caoutchouc de base (14B) d'une bande de roulement (14) d'un pneu à clouter (10) selon la revendication 6, dans lequel constante $k_2$ du module d'élasticité en traction dynamique E' satisfait :

$$k_2 = 6{,}2 \times 10^{-3} \text{ à } 56{,}2 \times 10^{-3} \ (1/(MPa)^2)$$

où le module d'élasticité en traction dynamique E' est le module d'élasticité du caoutchouc de la couche de caoutchouc de base (14B) à la température ambiante et le module d'élasticité du caoutchouc de la couche de caoutchouc supérieure (14T) à la température ambiante.

FIG.1A

FIG.1B

FIG.2

[RELATIONSHIP BETWEEN
TOUCHNESS AND WEAR DEPTH]

| NO | | TF OF RUBBER OF TOP RUBBER LAYER (N·m) | TF OF RUBBER OF BASE RUBBER LAYER (N·m) | LAYER THICKNESS OF TOP RUBBER LAYER BEFORE WEAR GO | LAYER THICKNESS OF TOP RUBBER LAYER AFTER WEAR GB | WEAR DEPTH OF RUBBER OF TOP RUBBER LAYER GB-GO (mm) | HEIGHT OF STUD BEFORE WEAR PO | HEIGHT OF STUD AFTER WEAR PB | WEAR DEPTH OF STUD PB-PO (mm) | WEAR DEPTH OF STUD / WEAR DEPTH OF RUBBER OF TOP RUBBER LAYER | k1 MINIMUM VALUE $4.3 \times 10^{-5}$ $(1/(N·m)^2)$ | | k1 MAXIMUM VALUE $34.1 \times 10^{-5}$ $(1/(N·m)^2)$ | |
|---|---|---|---|---|---|---|---|---|---|---|---|---|---|---|
| 1 | COMPARATIVE EXAMPLE 1 | 110 | 152 | 9.5 | 8.0 | 1.5 | 11.0 | 7.6 | 3.4 | 2.27 | 3.0 | $\times 10^{-5}$ | 9.0 | $\times 10^{-5}$ |
| 2 | COMPARATIVE EXAMPLE 2 | 110 | 110 | 9.5 | 8.1 | 1.4 | 11.0 | 8.8 | 2.2 | 1.57 | 4.1 | $\times 10^{-5}$ | 12.4 | $\times 10^{-5}$ |
| 3 | EXAMPLE 1 | 105 | 110 | 9.5 | 8.0 | 1.5 | 11.0 | 8.8 | 2.2 | 1.47 | 4.3 | $\times 10^{-5}$ | 13.0 | $\times 10^{-5}$ |
| 4 | EXAMPLE 2 | 80 | 110 | 9.5 | 7.0 | 2.5 | 11.0 | 8.8 | 2.2 | 0.88 | 5.7 | $\times 10^{-5}$ | 17.0 | $\times 10^{-5}$ |
| 5 | EXAMPLE 3 | 70 | 110 | 9.5 | 5.7 | 4.4 | 11.0 | 8.8 | 2.2 | 0.50 | 6.5 | $\times 10^{-5}$ | 19.5 | $\times 10^{-5}$ |
| 6 | COMPARATIVE EXAMPLE 3 | 65 | 110 | 9.5 | 4.0 | 4.5 | 11.0 | 8.8 | 2.2 | 0.49 | 7.0 | $\times 10^{-5}$ | 21.0 | $\times 10^{-5}$ |
| 7 | COMPARATIVE EXAMPLE 4 | 80 | 152 | 9.5 | 7.3 | 2.2 | 11.0 | 7.6 | 3.4 | 1.55 | 4.1 | $\times 10^{-5}$ | 12.3 | $\times 10^{-5}$ |
| 8 | EXAMPLE 4 | 80 | 147 | 9.5 | 7.3 | 2.2 | 11.0 | 7.7 | 3.3 | 1.50 | <u>4.3</u> | $\times 10^{-5}$ | 12.8 | $\times 10^{-5}$ |
| 9 | EXAMPLE 5 | 80 | 55 | 9.5 | 7.0 | 2.5 | 11.0 | 9.7 | 1.3 | 0.52 | 11.4 | $\times 10^{-5}$ | <u>34.1</u> | $\times 10^{-5}$ |
| 10 | COMPARATIVE EXAMPLE 5 | 80 | 51 | 9.5 | 7.0 | 2.5 | 11.0 | 9.8 | 1.2 | 0.48 | 12.2 | $\times 10^{-5}$ | 36.5 | $\times 10^{-5}$ |
| 11 | COMPARATIVE EXAMPLE 6 | 74 | 51 | 9.5 | 5.7 | 3.8 | 11.0 | 9.8 | 1.2 | 0.32 | 13.2 | $\times 10^{-5}$ | 39.6 | $\times 10^{-5}$ |

FIG.3

[RELATIONSHIP BETWEEN
E' AND WEAR DEPTH]

| NO | | E' OF RUBBER OF TOP RUBBER LAYER (Mpa) | E' OF RUBBER OF BASE RUBBER LAYER (Mpa) | LAYER THICKNESS OF TOP RUBBER LAYER BEFORE WEAR GO | LAYER THICKNESS OF TOP RUBBER LAYER AFTER WEAR GB | WEAR DEPTH OF RUBBER OF TOP RUBBER LAYER GB-GO (mm) | HEIGHT OF STUD BEFORE WEAR PO | HEIGHT OF STUD AFTER WEAR PB | WEAR DEPTH OF STUD PB-PO (mm) | WEAR DEPTH OF STUD / WEAR DEPTH OF RUBBER OF TOP RUBBER LAYER | k2 MINIMUM VALUE 6.2 x 10⁻³ (1/(MPa)²) | | k2 MAXIMUM VALUE 56.2 x 10⁻³ (1/(MPa)²) | |
|---|---|---|---|---|---|---|---|---|---|---|---|---|---|---|
| 1 | COMPARATIVE EXAMPLE 1 | 7.0 | 18.0 | 9.5 | 8.0 | 1.5 | 11.0 | 7.6 | 3.4 | 2.27 | 4.0 | x 10⁻³ | 11.9 | x 10⁻³ |
| 2 | COMPARATIVE EXAMPLE 2 | 7.0 | 12.7 | 9.5 | 8.1 | 1.4 | 11.0 | 8.8 | 2.2 | 1.57 | 5.6 | x 10⁻³ | 16.9 | x 10⁻³ |
| 3 | EXAMPLE 1 | 6.4 | 12.7 | 9.5 | 8.0 | 1.5 | 11.0 | 8.8 | 2.2 | 1.47 | 6.2 | x 10⁻³ | 18.5 | x 10⁻³ |
| 4 | EXAMPLE 2 | 4.2 | 12.7 | 9.5 | 7.0 | 2.5 | 11.0 | 8.8 | 2.2 | 0.88 | 9.4 | x 10⁻³ | 28.1 | x 10⁻³ |
| 5 | EXAMPLE 3 | 3.7 | 12.7 | 9.5 | 5.7 | 4.4 | 11.0 | 8.8 | 2.2 | 0.50 | 10.6 | x 10⁻³ | 31.9 | x 10⁻³ |
| 6 | COMPARATIVE EXAMPLE 3 | 3.5 | 12.7 | 9.5 | 4.0 | 4.5 | 11.0 | 8.8 | 2.2 | 0.49 | 11.2 | x 10⁻³ | 33.7 | x 10⁻³ |
| 7 | COMPARATIVE EXAMPLE 4 | 4.2 | 18.0 | 9.5 | 7.3 | 2.2 | 11.0 | 7.6 | 3.4 | 1.55 | 6.6 | x 10⁻³ | 19.9 | x 10⁻³ |
| 8 | EXAMPLE 4 | 4.2 | 16.9 | 9.5 | 7.3 | 2.2 | 11.0 | 7.7 | 3.3 | 1.50 | 7.0 | x 10⁻³ | 21.1 | x 10⁻³ |
| 9 | EXAMPLE 5 | 4.2 | 6.4 | 9.5 | 7.0 | 2.5 | 11.0 | 9.7 | 1.3 | 0.52 | 18.7 | x 10⁻³ | 56.2 | x 10⁻³ |
| 10 | COMPARATIVE EXAMPLE 5 | 4.2 | 5.9 | 9.5 | 7.0 | 2.5 | 11.0 | 9.8 | 1.2 | 0.48 | 20.1 | x 10⁻³ | 60.3 | x 10⁻³ |
| 11 | COMPARATIVE EXAMPLE 6 | 3.7 | 5.3 | 9.5 | 5.7 | 3.8 | 11.0 | 9.8 | 1.2 | 0.32 | 25.5 | x 10⁻³ | 76.6 | x 10⁻³ |

FIG.4A

FIG.4B

SIDE OF THE
TREAD

THE OTHER-END
SIDE

FIG.5A

FIG.5B

FIG.6

FIG.7A

FIG.7B

FIG.8A [RELATIONSHIP WITH M50]

| M50 | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | MPa | 1.0 | 1.2 | 1.1 | 1.6 | 1.20 | 1.45 | 1.21 | 95 | 100 |
| COMPARATIVE EXAMPLE 2 | MPa | 1.0 | 1.2 | 1.1 | 1.4 | 1.20 | 1.27 | 1.06 | 100 | 100 |
| EXAMPLE 1 | MPa | 1.0 | 1.2 | 1.1 | 1.3 | 1.20 | 1.18 | 0.98 | 111 | 100 |
| EXAMPLE 2 | MPa | 1.0 | 1.2 | 1.1 | 1.0 | 1.20 | 0.91 | 0.76 | 115 | 100 |
| EXAMPLE 3 | MPa | 1.0 | 1.2 | 1.1 | 0.8 | 1.20 | 0.73 | 0.61 | 128 | 100 |

FIG.8B [RELATIONSHIP WITH M300]

| M300 | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | MPa | 7.0 | 7.0 | 7.4 | 9.0 | 1.00 | 1.22 | 1.22 | 95 | 100 |
| COMPARATIVE EXAMPLE 2 | MPa | 7.0 | 7.0 | 7.4 | 7.8 | 1.00 | 1.05 | 1.05 | 100 | 100 |
| EXAMPLE 1 | MPa | 7.0 | 7.0 | 7.4 | 7.2 | 1.00 | 0.97 | 0.97 | 111 | 100 |
| EXAMPLE 2 | MPa | 7.0 | 7.0 | 7.4 | 6.5 | 1.00 | 0.88 | 0.88 | 115 | 100 |
| EXAMPLE 3 | MPa | 7.0 | 7.0 | 7.4 | 5.7 | 1.00 | 0.77 | 0.77 | 128 | 100 |

FIG.9A [RELATIONSHIP WITH TOUGHNESS]

| TOUGHNESS (N·m) | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | N·m | 80 | 45 | 110 | 75 | 0.56 | 0.68 | 1.21 | 95 | 100 |
| COMPARATIVE EXAMPLE 2 | N·m | 80 | 45 | 110 | 65 | 0.56 | 0.59 | 1.05 | 100 | 100 |
| EXAMPLE 1 | N·m | 80 | 45 | 110 | 60 | 0.56 | 0.55 | 0.97 | 111 | 100 |
| EXAMPLE 2 | N·m | 80 | 45 | 110 | 56 | 0.56 | 0.51 | 0.91 | 115 | 100 |
| EXAMPLE 3 | N·m | 80 | 45 | 110 | 52 | 0.56 | 0.47 | 0.84 | 128 | 100 |

FIG.9B [RELATIONSHIP WITH E]

| E' (Mpa) DYNAMIC STRAIN 1%, FREQUENCY 52Hz | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | MPa | 4.2 | 3.4 | 12.7 | 12.4 | 0.81 | 0.98 | 1.21 | 95 | 100 |
| COMPARATIVE EXAMPLE 2 | MPa | 4.2 | 3.4 | 12.7 | 10.9 | 0.81 | 0.86 | 1.06 | 100 | 100 |
| EXAMPLE 1 | MPa | 4.2 | 3.4 | 12.7 | 10.0 | 0.81 | 0.79 | 0.97 | 111 | 100 |
| EXAMPLE 2 | MPa | 4.2 | 3.4 | 12.7 | 9.4 | 0.81 | 0.74 | 0.91 | 115 | 100 |
| EXAMPLE 3 | MPa | 1.2 | 3.4 | 12.7 | 8.2 | 0.81 | 0.65 | 0.80 | 128 | 100 |

FIG.10A [RELATIONSHIP WITH TB]

| TB | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | MPa | 16 | 10 | 19 | 15 | 0.63 | 0.79 | 1.26 | 95 | 100 |
| COMPARATIVE EXAMPLE 2 | MPa | 16 | 10 | 19 | 13 | 0.63 | 0.68 | 1.09 | 100 | 100 |
| EXAMPLE 1 | MPa | 16 | 10 | 19 | 11 | 0.63 | 0.58 | 0.93 | 111 | 100 |
| EXAMPLE 2 | MPa | 16 | 10 | 19 | 11 | 0.63 | 0.58 | 0.93 | 115 | 100 |
| EXAMPLE 3 | MPa | 16 | 10 | 19 | 9 | 0.63 | 0.47 | 0.76 | 128 | 100 |

FIG.10B [RELATIONSHIP EB]

| EB | UNIT | ELASTIC MODULUS OF TOP RUBBER (23°) ROOM TEMPERATURE | ELASTIC MODULUS OF TOP RUBBER (100°) HIGH TEMPERATURE | ELASTIC MODULUS OF BASE RUBBER (23°) ROOM TEMPERATURE | ELASTIC MODULUS OF BASE RUBBER (100°) HIGH TEMPERATURE | ELASTIC MODULUS OF TOP RUBBER (100°) / ELASTIC MODULUS OF TOP RUBBER (23°) | ELASTIC MODULUS OF BASE RUBBER (100°) / ELASTIC MODULUS OF BASE RUBBER (23°) | (ELASTIC MODULUS OF BASE RUBBER (100°) / ELASTIC MODULUS OF BASE RUBBER (23°)) / ELASTIC MODULUS OF TOP RUBBER (100°) / ELASTIC MODULUS OF TOP RUBBER (23°) | DEMOLDING PERFORMANCE AT CURING (INDEX) | ANTI-STUD-LOSS PERFORMANCE (RATIO OF REMAINING PINS) (INDEX) |
|---|---|---|---|---|---|---|---|---|---|---|
| COMPARATIVE EXAMPLE 1 | % | 550 | 450 | 640 | 635 | 0.82 | 0.99 | 1.21 | 95 | 100 |
| COMPARATIVE EXAMPLE 2 | % | 550 | 450 | 640 | 550 | 0.82 | 0.86 | 1.05 | 100 | 100 |
| EXAMPLE 1 | % | 550 | 450 | 640 | 520 | 0.82 | 0.81 | 0.99 | 111 | 100 |
| EXAMPLE 2 | % | 550 | 450 | 640 | 460 | 0.82 | 0.72 | 0.88 | 115 | 100 |
| EXAMPLE 3 | % | 550 | 450 | 640 | 400 | 0.82 | 0.63 | 0.76 | 128 | 100 |

**EP 3 363 658 B1**

**REFERENCES CITED IN THE DESCRIPTION**

**Patent documents cited in the description**

- EP 2261061 A1
- EP 0729826 A2

- JP 2010070052 A